# EUROPEAN PATENT APPLICATION

(11) **EP 4 325 338 A1**
(43) Date of publication of application: **21.02.2024**
(21) Application number: 22794457.6
(22) Date of filing: 28.03.2022
(51) Int. Cl.: G06F 3/0481

(54) **DISPLAY CONTROL METHOD, ELECTRONIC DEVICE, AND COMPUTER STORAGE MEDIUM**

(30) Priority: 30.04.2021 CN 202110484217
(71) Applicant: Huawei Technologies Co., Ltd., Shenzhen, Guangdong 518129 (CN)
(72) Inventor: HAO, Huaqi, Shenzhen, Guangdong 518129 (CN)
(74) Representative: Huawei European IPR
(86) International application number: PCT/CN2022/083468
(87) International publication number: WO 2022/227984

(57) **Abstract**

This application relates to a display control method, an electronic device, and a computer storage medium, and relates to the field of terminal technologies. The electronic device includes an interior screen, an exterior screen, a front-facing camera, and a rear-facing camera. The interior screen is a foldable screen. The interior screen and the front-facing camera are located on one side of the electronic device. The exterior screen and the rear-facing camera are located on the other side of the electronic device. The method includes: when the interior screen is in a folded state, displaying an icon of a call application on the exterior screen; when an operation performed on the icon of the call application is detected, displaying a first interface of the call application on the exterior screen; and when an operation of unfolding the interior screen is detected, displaying a second interface of the call application on the interior screen, where a quantity of elements displayed on the second interface is greater than a quantity of elements displayed on the first interface. In this technical solution, the electronic device can determine or control display of the interior screen and/or the exterior screen by obtaining a status (for example, the folded state or an unfolded state) of the electronic device, so that an operation of a user is more convenient, utilization is high, and user experience is enhanced.

## Description

### CROSS-REFERENCE TO RELATED APPLICATIONS

This application claims priority to Chinese Patent Application No. 202110484217.4, filed with the China National Intellectual Property Administration on April 30, 2021 and entitled "DISPLAY CONTROL METHOD, ELECTRONIC DEVICE, AND COMPUTER STORAGE MEDIUM", which is incorporated herein by reference in its entirety.

### TECHNICAL FIELD

This application relates to the field of electronic technologies, and in particular, to a display control method, an electronic device, and a computer storage medium.

### BACKGROUND

With continuous development of flexible display screen technologies, a form of a display screen of an electronic device also changes greatly. As a new form of a display screen, a foldable screen is used on an electronic device such as a mobile phone. When a user does not need to use a mobile phone, a foldable screen may be in a folded state, to reduce a volume of the mobile phone and facilitate carrying by the user. When the user needs to use the screen of the mobile phone to perform operations such as reading and entertainment, the foldable screen may be in an unfolded state, so that an area of a display interface can be increased, and more comfortable use experience is provided for the user.

In addition, dual-screen mobile phones with both interior screens and exterior screens have gradually become a development direction of future mobile phones. However, there are already two types of dual-screen mobile phones on the market. One type of dual-screen mobile phone has a large exterior screen and can display a large amount of content. However, a problem of increasing costs and a structural thickness exists, and practicability and utilization are low. In addition, in terms of an application rule, experience content is usually directly mapped from an interior screen to an exterior screen, and an interaction mode is an interaction mode of the interior screen. Therefore, adaptation or adjustment cannot be performed based on a size of the exterior screen. The other type of dual-screen mobile phone has a small exterior screen, and functions displayed by this type of dual-screen mobile phone are limited, for example, only message reminding, call answering and hanging up, and camera photographing. In this case, other functions (such as navigation) of an interior screen cannot be effectively mapped to the exterior screen for display, and user experience is poor.

### SUMMARY

In view of this, it is necessary to provide a display control method, an electronic device, and a computer storage medium for better user experience.

According to a first aspect, an embodiment of this application provides a display control method, applied to an electronic device. The electronic device includes an interior screen, an exterior screen, a front-facing camera, and a rear-facing camera. The interior screen is a foldable screen. The interior screen and the front-facing camera are located on one side of the electronic device. The exterior screen and the rear-facing camera are located on the other side of the electronic device. The method includes: when the interior screen is in a folded state, displaying an icon of a call application on the exterior screen; when an operation performed on the icon of the call application is detected, displaying a first interface of the call application on the exterior screen; and when an operation of unfolding the interior screen is detected, displaying a second interface of the call application on the interior screen, where a quantity of elements displayed on the second interface is greater than a quantity of elements displayed on the first interface. In this embodiment of this application, the electronic device can determine or control display of the interior screen and/or the exterior screen by obtaining a status (for example, the folded state or an unfolded state) of the electronic device, so that an operation of a user is more convenient, utilization is high, practicability is high, and user experience is enhanced. For example, the electronic device may determine or control display of the call screen on the interior screen and/or the exterior screen based on the state of the electronic device.

In a possible design, the element includes any one or a combination of a call record, a contact, and a dialer, and the call record includes any one or a combination of a caller number, a caller region, a caller name, and whether a call is a nuisance call. It is clear that, in this design, when the electronic device is not unfolded, various states (for example, the call record, the contact, or the dialer) may be effectively displayed on the exterior screen, so that the user directly performs an operation on the exterior screen. Optionally, the dialer is used as an example. When the electronic device is in the folded state, and after the user taps a phone icon, if the user does not perform another action (for example, unfold the electronic device), the electronic device may be set to directly display the dialer, so as to help the user to directly make a call on the exterior screen. For another example, when there is a missed call and the user does not unfold the electronic device, the electronic device may be set to display the missed call on the exterior screen, and directly dial back the call by using the displayed dialer.

In a possible design, when the missed call is displayed on the icon of the call application, the first interface displays a call record, and the second interface displays the call record, a contact, and the dialer.

In a possible design, the method further includes: when the second interface is displayed on the interior screen, the exterior screen is in a screen-off state.

In a possible design, the method further includes: when an operation of folding the interior screen is detected, setting the exterior screen to the screen-off state and/or a screen-locked state, or keeping the exterior screen locked and displaying a default user interface. It is clear that, in this design, when the electronic device enters or switches to a user interface on the interior screen, in other words, when the electronic device switches from the folded state to the unfolded state, if the user closes the electronic device again (in other words, the electronic device switches to the folded state again), the exterior screen of the electronic device may be set to the screen-off state and/or the screen-locked state, or the exterior screen is kept locked and the default user interface is displayed. This is not limited herein.

According to a second aspect, an embodiment of this application provides another display control method, applied to an electronic device. The electronic device includes an interior screen, an exterior screen, a front-facing camera, and a rear-facing camera. The interior screen is a foldable screen. The interior screen and the front-facing camera are located on one side of the electronic device. The exterior screen and the rear-facing camera are located on the other side of the electronic device. The method includes: detecting a first operation of a user when the interior screen is in an unfolded state, where the first operation acts on an icon of navigation software on the interior screen; displaying a main interface of the navigation software on the interior screen in response to the first operation; when a second operation of the user is detected, displaying a first navigation interface of the navigation software on the interior screen; and when an operation of folding the interior screen is detected, displaying a second navigation interface of the navigation software on the exterior screen, where a quantity of elements displayed on the second navigation interface is less than a quantity of elements displayed on the first navigation interface. In this embodiment of this application, the electronic device can determine or control display of the interior screen and/or the exterior screen by obtaining a status (for example, a folded state or the unfolded state) of the electronic device, so that an operation of the user is more convenient, utilization is high, practicability is high, and user experience is enhanced. For example, the electronic device may determine or control display of the navigation interface on the interior screen and/or the exterior screen based on the state of the electronic device.

In a possible design, the element displayed on the first navigation interface includes a map interface and critical information; and the element displayed on the second navigation interface includes the critical information, where the critical information includes one or a combination of a distance and time to a destination, a turning reminder, and a distance in meters to a speed monitoring point.

In a possible design, the method further includes: when an operation of unfolding the interior screen is detected, enlarging the element displayed on the second navigation interface and displaying the enlarged element on the interior screen. It is clear that, in this design, when the exterior screen is switched to the interior screen again, navigation information displayed on the exterior screen may be enlarged and displayed on the interior screen, so that user experience is better.

According to a third aspect, an embodiment of this application provides another display control method, applied to an electronic device. The electronic device includes an interior screen, an exterior screen, a front-facing camera, and a rear-facing camera. The interior screen is a foldable screen. The interior screen and the front-facing camera are located on one side of the electronic device. The exterior screen and the rear-facing camera are located on the other side of the electronic device. The method includes: when the interior screen is in a folded state, displaying an icon of a message application on the exterior screen; when an operation performed on the icon of the message application is detected, displaying a first interface of the message application on the exterior screen; and when an operation of unfolding the interior screen is detected, displaying a second interface of the message application on the interior screen, where a quantity of elements displayed on the second interface is greater than a quantity of elements displayed on the first interface. In this embodiment of this application, the electronic device can determine or control display of the interior screen and/or the exterior screen by obtaining a status (for example, a folded state or the unfolded state) of the electronic device, so that an operation of the user is more convenient, utilization is high, practicability is high, and user experience is enhanced. For example, the electronic device may determine or control display of a message on the interior screen and/or the exterior screen based on the state of the electronic device.

In a possible design, the element displayed on the first interface includes a message reminder, prompt information, and a voice reply button; and the element displayed on the second interface includes the message reminder, the prompt information, the voice reply button, a reply box, and an input method invoking window, where the prompt information is used to prompt the user to unfold the interior screen.

In a possible design, the element displayed on the second interface further includes a home screen or an application interface displayed before the interior screen is in the folded state last time, and a message drop-down menu or prompt information is set on the home screen or the application interface. It is clear that, the design can help the user to pull down a menu or click the prompt information to view and/or process the message.

In a possible design, the method further includes: when an operation of folding the interior screen is detected, indicating on the exterior screen that a message has been delivered or a message has been read. It is clear that, in this design, when the electronic device is closed again, the electronic device may be set to display information such as "SMS message delivered" or "SMS message read" on the exterior screen, so that user experience is better.

According to a fourth aspect, an embodiment of this application provides still another display control method, applied to an electronic device. The electronic device includes an interior screen, an exterior screen, a front-facing camera, and a rear-facing camera. The interior screen is a foldable screen. The interior screen and the front-facing camera are located on one side of the electronic device. The exterior screen and the rear-facing camera are located on the other side of the electronic device. The method includes: when the interior screen is in an unfolded state, detecting that a user operates an icon of an application that can be converted to run in the background on the interior screen; displaying and executing, on the interior screen in response to the user operation, the application that can be converted to run in the background; and when an operation of folding the interior screen is detected, switching the application to run in the background, and switching to the exterior screen. In this embodiment of this application, the electronic device can determine or control display of the interior screen and/or the exterior screen by obtaining a status (for example, the folded state or an unfolded state) of the electronic device, so that an operation of a user is more convenient, utilization is high, practicability is high, and user experience is enhanced. For example, the electronic device may determine or control, based on the status of the electronic device, display and execution of the application that can be converted to run in the background on the interior screen and/or the exterior screen. Optionally, the application that can be converted to run in the background includes but is not limited to music, recording, a running count, or the like.

In a possible design, the switching to the exterior screen includes: controlling the exterior screen to display a screen-off interface and/or a screen-locked interface, or keeping the exterior screen locked and displaying a default user interface. It is clear that, in this design, when the exterior screen is locked, the exterior screen may further set and display, on the basis of the screen-locked interface, an icon of a corresponding control button, for example, a music pause key or close key, to control the application running in the background.

According to a fifth aspect, an embodiment of this application provides an electronic device. The electronic device includes an interior screen, where the interior screen is a foldable screen; an exterior screen; a front-facing camera; and a rear-facing camera. The interior screen and the front-facing camera are located on one side of the electronic device, and the exterior screen and the rear-facing camera are located on the other side of the electronic device. The electronic device further includes one or more processors, a memory, and one or more computer programs. The one or more computer programs are stored in the memory, and the one or more computer programs include instructions. When the instructions are executed by the electronic device, the electronic device is enabled to perform the method in any one of the first aspect and the possible designs of the first aspect in embodiments of this application.

According to a sixth aspect, an embodiment of this application provides another electronic device. The electronic device includes an interior screen, where the interior screen is a foldable screen; an exterior screen; a front-facing camera; and a rear-facing camera. The interior screen and the front-facing camera are located on one side of the electronic device, and the exterior screen and the rear-facing camera are located on the other side of the electronic device. The electronic device further includes one or more processors, a memory, and one or more computer programs. The one or more computer programs are stored in the memory, and the one or more computer programs include instructions. When the instructions are executed by the electronic device, the electronic device is enabled to perform the method in any one of the second aspect and the possible designs of the second aspect in embodiments of this application.

According to a seventh aspect, an embodiment of this application provides still another electronic device. The electronic device includes an interior screen, where the interior screen is a foldable screen; an exterior screen; a front-facing camera; and a rear-facing camera. The interior screen and the front-facing camera are located on one side of the electronic device, and the exterior screen and the rear-facing camera are located on the other side of the electronic device. The electronic device further includes one or more processors, a memory, and one or more computer programs. The one or more computer programs are stored in the memory, and the one or more computer programs include instructions. When the instructions are executed by the electronic device, the electronic device is enabled to perform the method in the third aspect and the possible implementations.

According to an eighth aspect, an embodiment of this application provides a computer storage medium. The computer storage medium includes instructions. When the instructions are run on a device, the device is enabled to perform the method in any one of the foregoing aspects and the possible designs of the aspects in embodiments of this application.

In addition, for technical effect brought by any one of the possible design manners of the fifth aspect to the eighth aspect, refer to technical effect brought by different design manners related to the method part. Details are not described herein again.

### BRIEF DESCRIPTION OF DRAWINGS

To describe technical solutions in embodiments of this application or in the conventional technology more clearly, the following briefly describes accompanying drawings used in describing the embodiments or the conventional technology. It is clear that, the accompanying drawings in the following descriptions show some embodiments of this application, and a person of ordinary skill in the art may still derive other accompanying drawings from these accompanying drawings without creative efforts.
FIG. 1 is a schematic diagram of a hardware structure of an electronic device according to an embodiment of this application;
FIG. 2A to FIG. 2D are various schematic diagrams of a mobile phone in an unfolded state and a folded state according to an embodiment of this application;
FIG. 2E and FIG. 2F are schematic diagrams of another mobile phone in an unfolded state according to an embodiment of this application;
FIG. 3A is a schematic diagram of a user interface displayed on an interior screen of a mobile phone according to an embodiment of this application;
FIG. 3B is a schematic diagram of a user interface displayed on an exterior screen of a mobile phone according to an embodiment of this application;
FIG. 4A and FIG. 4B are schematic diagrams 1 of user interfaces displayed on interior and exterior screens of a mobile phone according to an embodiment of this application;
FIG. 5A and FIG. 5B are schematic diagrams 2 of user interfaces displayed on interior and exterior screens of a mobile phone according to an embodiment of this application;
FIG. 6A and FIG. 6B are schematic diagrams 3 of user interfaces displayed on interior and exterior screens of a mobile phone according to an embodiment of this application;
FIG. 7A to FIG. 7D(2) are schematic diagrams 4 of user interfaces displayed on interior and exterior screens of a mobile phone according to an embodiment of this application;
FIG. 8A to FIG. 8C are schematic diagrams 5 of user interfaces displayed on interior and exterior screens of a mobile phone according to an embodiment of this application;
FIG. 9A to FIG. 9C are schematic diagrams 6 of user interfaces displayed on interior and exterior screens of a mobile phone according to an embodiment of this application;
FIG. 10A to FIG. 10C are schematic diagrams 7 of user interfaces displayed on interior and exterior screens of a mobile phone according to an embodiment of this application;
FIG. 11A to FIG. 11C are schematic diagrams 8 of user interfaces displayed on interior and exterior screens of a mobile phone according to an embodiment of this application;
FIG. 12A to FIG. 12C are schematic diagrams 9 of user interfaces displayed on interior and exterior screens of a mobile phone according to an embodiment of this application;
FIG. 13 is a schematic diagram of an application scenario 1 of a display control method according to an embodiment of this application;
FIG. 14 is a schematic diagram of an application scenario 2 of a display control method according to an embodiment of this application;
FIG. 15 is a schematic diagram of an application scenario 3 of a display control method according to an embodiment of this application;
FIG. 16 is a flowchart of a display control method 1 for an electronic device according to an embodiment of the present invention;
FIG. 17 is a flowchart of a display control method 2 for an electronic device according to an embodiment of the present invention;
FIG. 18 is a flowchart of a display control method 3 for an electronic device according to an embodiment of the present invention;
FIG. 19 is a flowchart of a display control method 4 for an electronic device according to an embodiment of the present invention; and
FIG. 20 is a schematic diagram of a structure of an electronic device according to an embodiment of the present invention.

List of reference numerals of main elements:
processors 110 and 201; internal memory 121; external memory interface 122;
first camera 131; second camera 132; first display screen 141;
folding region 141a; first display region 141b; second display region 141c;
second display screen 142; sensor module 150; touch sensor 150A;
pressure sensor 150B; distance sensor 150C; acceleration sensor 150D;
audio module 160; speaker 161; receiver 162; microphone 163;
headset jack 164; SIM card interface 171; USB interface 172;
charging management module 180; power management module 181; battery 182;
mobile communication module 191; wireless communication module 192;
electronic device 200; interior screen 202; exterior screen 203; memory 204; computer program 205.

In the following specific embodiments, this application is further described with reference to accompanying drawings.

### DESCRIPTION OF EMBODIMENTS

It should be understood that, in this application, unless otherwise specified, "/" means "or". For example, A/B may represent A or B. "And/or" in this application describes only an association relationship between associated objects and represents that three relationships may exist. For example, A and/or B may represent the following three cases: Only A exists, both A and B exist, and only B exists. "At least one" means one or more, and "a plurality of" means two or more.

In this application, "example", "in some embodiments", "in some other embodiments", or the like is used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In addition, terms such as "first" and "second" in this application are merely used for distinction and description, and cannot be understood as an indication or implication of relative importance or an implicit indication of a quantity of indicated technical features, or an indication or implication of a sequence.

The following describes an electronic device in embodiments of this application.

The electronic device in embodiments of this application may be any electronic device with a display screen, for example, a mobile phone (for example, a mobile phone with a foldable screen), or a tablet computer. Specifically, an example embodiment of the electronic device includes but is not limited to a device using iOS, Android, Microsoft, or another operating system. A specific form of the electronic device is not specially limited in the following embodiments. The mobile phone is used as an example to describe how the electronic device implements specific technical solutions in the embodiments.

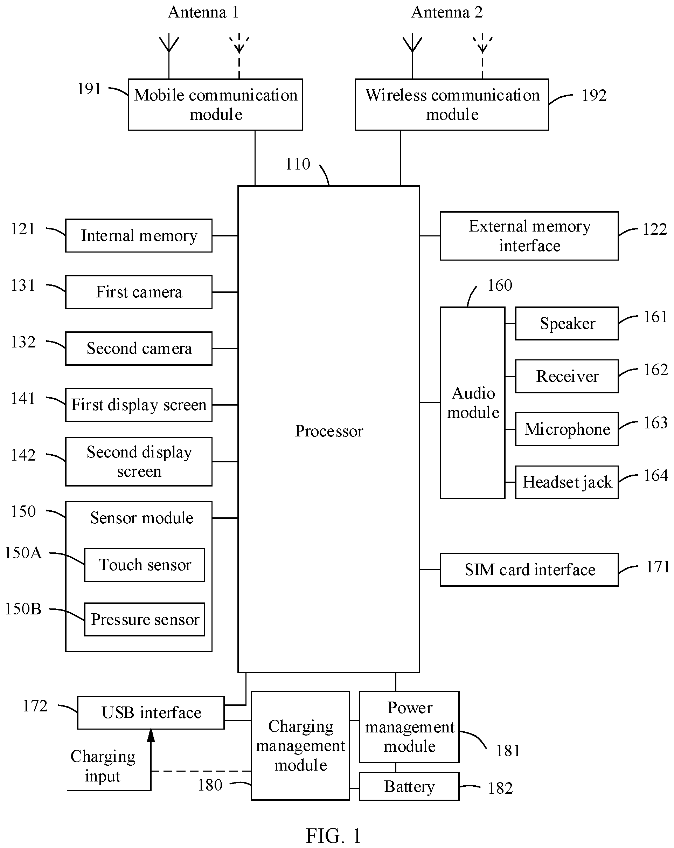

FIG. 1 is a schematic diagram of a hardware structure of an electronic device according to an embodiment of this application. For example, the electronic device includes a processor 110, an internal memory 121, an external memory interface 122, a first camera 131, a second camera 132, a first display screen 141, a second display screen 142, a sensor module 150, an audio module 160, a speaker 161, a receiver 162, a microphone 163, a headset jack 164, a subscriber identification module (subscriber identification module, SIM) card interface 171, a universal serial bus (universal serial bus, USB) interface 172, a charging management module 180, a power management module 181, a battery 182, a mobile communication module 191, and a wireless communication module 192. In addition, in this embodiment of this application, the electronic device may further include a motor, an indicator, a button, and the like. It should be understood that the hardware structure shown in FIG. 1 is merely an example. The electronic device in this embodiment of this application may have more or fewer components than the electronic device shown in the figure, two or more components may be combined, or there may be a different component configuration. Various components shown in the figure may be implemented in hardware including one or more signal processing and/or application-specific integrated circuits, software, or a combination of hardware and software.

The following describes the components of the electronic device in detail with reference to FIG. 1.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (Neural-network Processing Unit, NPU). Different processing units may be independent components, or may be integrated into one or more processors.

In some embodiments, a cache may be further disposed in the processor 110, configured to store instructions and data. For example, the cache in the processor 110 may be a cache memory. The cache may be configured to store instructions and/or data that are just used, generated, or recycled by the processor 110. If the processor 110 needs to use the instructions or the data again, the processor 110 may directly invoke the instructions or the data from the cache. This helps reduce time for the processor 110 to obtain the instructions or the data, and helps improve system efficiency.

The internal memory 121 may be configured to store a program and/or data. In some embodiments, the internal memory 121 includes a program storage region and a data storage region. The program storage area may be configured to store an operating system (for example, Android or iOS), a computer program (for example, a facial recognition function or a voice playing function) required by at least one function, and the like. The data storage area may be configured to store data (for example, audio data or a facial image) created and/or collected in a process of using the electronic device. For example, the processor 110 may invoke the program and/or data stored in the internal memory 121, so that the electronic device performs a corresponding method, to implement one or more functions. For example, the processor 110 invokes some programs and/or data in the internal memory, so that the electronic device performs the unlocking method provided in embodiments of this application, and a user can quickly and conveniently unlock the electronic device to enter a guest mode. The internal memory 121 may be a high-speed random access memory, a non-volatile memory, and/or the like. For example, the non-volatile memory may include at least one of one or more disk memory devices, flash memory devices, and/or universal flash storages (universal flash storages, UFSs).

The external memory interface 122 may be configured to connect to an external storage card (for example, a micro SD card), to extend a storage capability of the electronic device. The external storage card communicates with the processor 110 through the external memory interface 122, to implement a data storage function. For example, the electronic device may store files such as images, music, and videos in the external storage card through the external memory interface 122.

The first camera 131 and the second camera 132 each may be configured to capture or collect a moving image, a static image, or the like. The first camera 131 is used as an example. Generally, the first camera 131 includes a lens and an image sensor. An object is projected onto the image sensor by using an optical image generated by the lens, and then the optical image is converted into an electrical signal for subsequent processing.

For example, the image sensor may be a charge-coupled device (charge-coupled device, CCD) or a complementary metal-oxide-semiconductor (complementary metal-oxide-semiconductor, CMOS) photoelectric transistor. The image sensor converts an optical signal into an electrical signal, and then transmits the electrical signal to the ISP. The ISP converts the electrical signal into a digital image signal. For a specific implementation of the second camera 132, refer to the specific implementation of the first camera 131, and details are not described herein again. It should be noted that, in this embodiment of this application, the first camera 131 may include one or more cameras, and the second camera 132 may also include one or more cameras. This is not limited.

The first display screen 141 may include a display panel, configured to display a user interface. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. For example, the electronic device may implement a display function by using the GPU, the first display screen 141, or the application processor. It should be noted that the first display screen 141 may be a foldable screen or a non-foldable screen. This is not limited. It should be noted that for a specific implementation of the second display screen 142, refer to the specific implementation of the first display screen 141, and details are not described herein again.

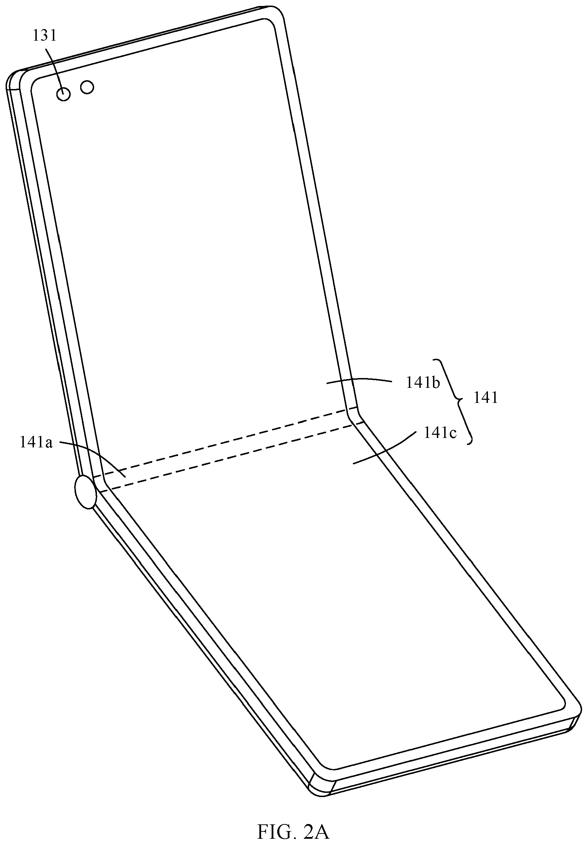

For example, the electronic device is an electronic device with a foldable screen, and includes the first display screen 141 and the second display screen 142. The first display screen 141 is a foldable screen, and the second display screen 142 is a non-foldable screen (namely, a flat screen). As shown in FIG. 2A to FIG. 2D, the first display screen 141 and the first camera 131 are located on a first face of the electronic device, and the second display screen 142 and the second camera 132 are located on a second face of the electronic device. The first face and the second face of the electronic device are different. For example, the first face may be a front face of the electronic device, and the second face may be a rear face of the electronic device. The first display screen 141 may be referred to as an interior screen, a main screen, or the like, and the first camera 131 may be referred to as a front-facing camera. The second display screen 142 may be referred to as an exterior screen, an auxiliary screen, or the like, and the second camera 132 may be referred to as a rear-facing camera.

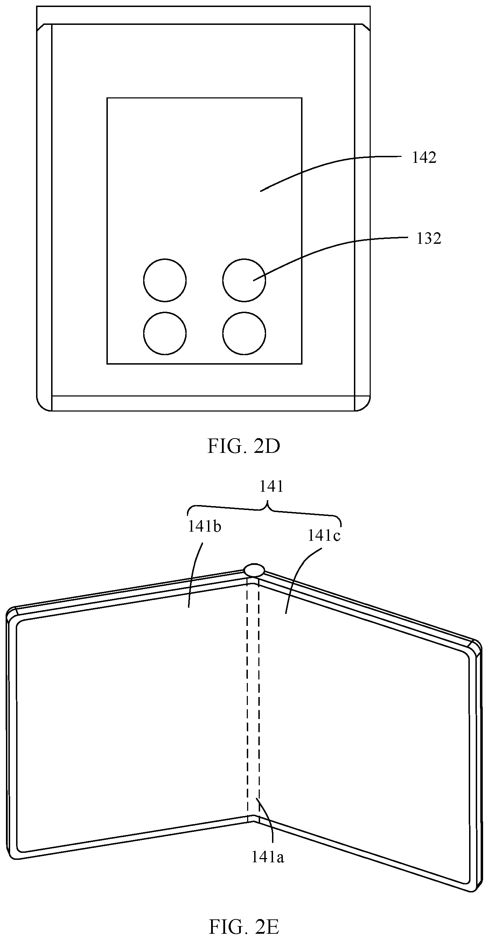

For example, a value of an included angle of the first display screen 141 may fall within a range of [0°, 180°]. For example, when the value of the included angle of the first display screen 141 is 0°, the first display screen 141 is in a folded state or a closed state (collectively referred to as the folded state below). When the value of the included angle of the first display screen 141 is 180°, the first display screen 141 is in an unfolded state. For example, the first display screen 141 shown in FIG. 2A to FIG. 2C is in the unfolded state. The first display screen 141 shown in FIG. 2D is in the folded state. For example, when the first display screen 141 is in the unfolded state as shown in FIG. 2A to FIG. 2C, the user may fold the first display screen 141, so that the first display screen 141 is in the folded state, as shown in FIG. 2D. When the first display screen 141 is in the folded state as shown in FIG. 2D, the user may unfold the first display screen 141, so that the first display screen 141 is in the unfolded state, as shown in FIG. 2A to FIG. 2C.

For another example, the electronic device includes the first display screen 141 and the second display screen 142. The first display screen 141 is a foldable screen, and the second display screen 142 is a foldable screen. In other words, in this embodiment of this application, the first display screen 141 is a foldable screen, and the second display screen 142 is a foldable screen or the second display screen may be a non-foldable screen. This is not limited.

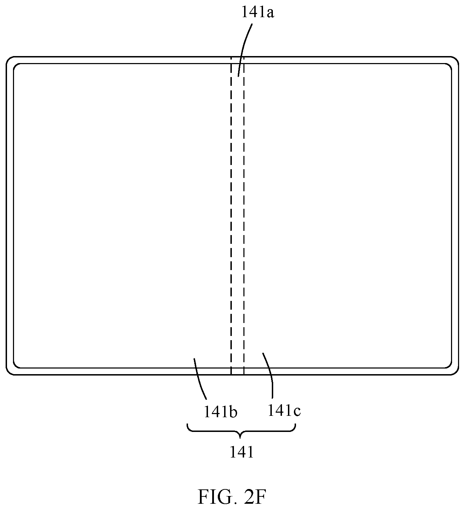

For example, as shown in FIG. 2A to FIG. 2D, when the first display screen 141 is bent, the first display screen 141 may be divided into a first display region 141b and a second display region 141c by using a folding region 141a as a boundary. The electronic device may display different content in the first display region 141b and the second display region 141c. For example, areas of the first display region 141b and the second display region 141c are equal, and the folding region 141a may be disposed along a first direction (for example, a horizontal direction shown in the figure). In this way, the first display screen 141 may be vertically folded (for example, folded up and down) along the folding region 141a. Certainly, in this embodiment of this application, a folding direction of the first display screen 141 is not limited. For example, refer to FIG. 2E and FIG. 2F. The first display screen 141 may alternatively be folded horizontally (for example, folded left and right) along the folding region 141a (a vertical direction shown in the figure). In the following embodiments, a mobile phone that can be vertically folded (for example, FIG. 2A to FIG. 2D) is used as an example for description.

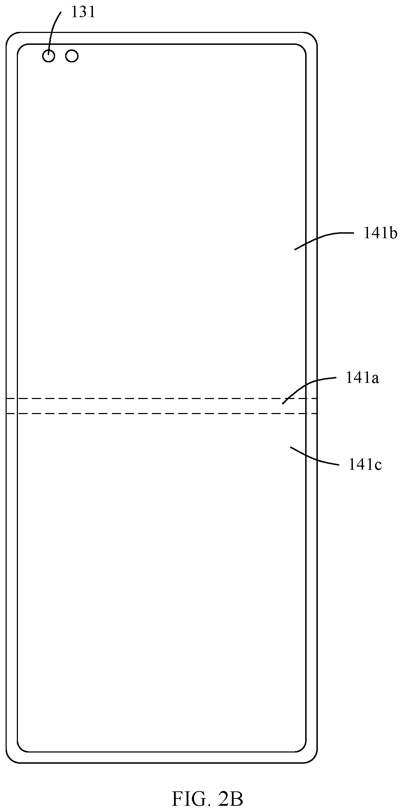

For example, as shown in FIG. 2A and FIG. 2B, the first camera 131 is disposed in an upper left corner region of the first display screen 141. It should be understood that parameters such as a quantity and a location of the first camera 131 are not limited in this embodiment of this application. For example, in another embodiment, the first camera 131 may be disposed in an upper right corner, in the middle of, or at another appropriate location of the first display screen 141. There are one, two, or more first cameras 131. Similarly, in this embodiment of this application, another component may be further disposed on the first display screen 141. This is not limited thereto.

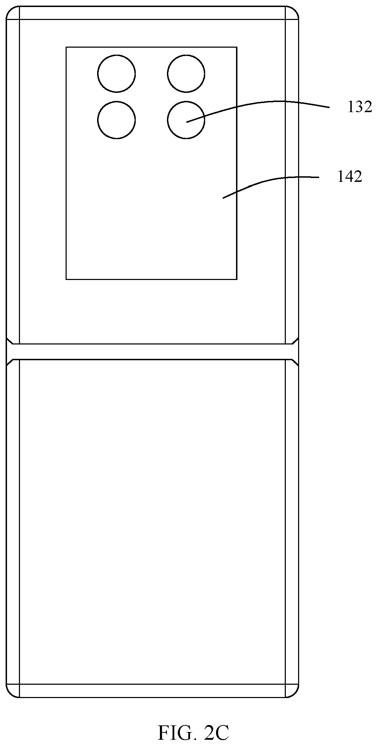

For example, as shown in FIG. 2C and FIG. 2D, the second display screen 142 is roughly in a strip shape. The second display screen 142 is disposed at a middle location corresponding to the first display region 141b on the rear face of the electronic device. An area of the second display screen 142 is less than an area of the first display region 141b or the second display region 141c. For example, the area of the second display screen 142 may be equal to half of the area of the first display region 141b, or may be less than half of the first display region 141b, or may be adjusted based on a specific situation. For another example, in another embodiment of this application, the second display screen 142 may be further set to be equal in size to the first display region 141b or the second display region 141c, and correspondingly disposed with the second display region 141b or the second display region 141c. For another example, when both the two display screens (namely, the first display screen 141 and the second display screen 142) are foldable screens, the sizes of the two display screens may be completely equal, the two display screens are correspondingly disposed, and folding regions 141a of the two display screens are also correspondingly disposed.

For example, as shown in FIG. 2C and FIG. 2D, the second camera 132 is disposed on the second display screen 142. Similarly, a quantity and a location of the second camera 132 are not limited in this embodiment of this application. For example, in another embodiment, there are one, two, or more second cameras 132 (for example, four second cameras are shown in the figure). For another example, the second camera 132 is disposed outside a region of the second display screen 142, in other words, the second display screen 142 is disposed independently of the second camera 132. Similarly, in this embodiment of this application, another component may be further disposed on the second display screen 142. This is not limited thereto.

It may be understood that, in this embodiment of this application, a location relationship, a connection relationship, and the like between the second display screen 142 and the rear face of the electronic device are not limited. For example, the second display screen 142 may be integrated or separated from the rear face of the electronic device.

The sensor module 150 may include one or more sensors, for example, a touch sensor 150A, a pressure sensor 150B, a distance sensor 150C, and an acceleration sensor 150D. In some other embodiments, the sensor module 150 may further include a gyroscope, a fingerprint sensor, an ambient optical sensor, an optical proximity sensor, a bone conduction sensor, a temperature sensor, an infrared light dot-matrix emitter, a floodlighting element, a time of flight (time of flight, TOF) distance sensor, and the like. For example, one or more of the infrared light dot-matrix emitter, the floodlighting element, or the TOF distance sensor may be integrated into the first camera 131 and/or the second camera 132, and may be configured to collect the facial image of the user.

The touch sensor 150A may also be referred to as a "touch panel". The touch sensor 150A may be disposed on the first display screen 141 and/or the second display screen 142. That the touch sensor 150A is disposed on the first display screen 141 is used as an example. The touch sensor 150A and the first display screen 141 form a first touchscreen, which is also referred to as a "first touchscreen". The touch sensor 150Ais configured to detect a touch operation performed on or near the touch sensor. The touch sensor 150A may transfer the detected touch operation to the application processor, to determine a type of a touch event. The electronic device may provide, on the first display screen 141, a visual output related to the touch operation, or the like. In some other embodiments, the touch sensor 150A may alternatively be disposed on a surface of the electronic device, and a location of the touch sensor 150A is different from that of the first display screen 141.

The pressure sensor 150B is configured to sense a pressure signal, and can convert the pressure signal into an electrical signal. For example, the pressure sensor 150B may be disposed on the first display screen 141 and/or the second display screen 142. Touch operations that are performed at a same touch location but have different touch operation intensity may correspond to different operation instructions.

The distance sensor 150C, which may also be referred to as a proximity sensor 150C or the like, is configured to measure a distance. For example, in a photographing scenario, the electronic device may perform distance measurement by using the distance sensor 150C to implement fast focusing.

The acceleration sensor 150D may detect accelerations in various directions (usually on three axes) of the electronic device. When the electronic device is static, the acceleration sensor 150D may detect a magnitude and a direction of gravity. The acceleration sensor 150D may be further configured to recognize a posture of the electronic device, and is applied to an application such as switching between landscape orientation and vertical orientation and a pedometer. For example, when the first display screen 141 of the electronic device is bent, the electronic device may identify a value of an included angle between the first display region 141b and the second display region 141c by using the acceleration sensor 150D. The electronic device can determine, based on the value of the included angle, that the electronic device is in the unfolded state (as shown in FIG. 2A to FIG. 2C) or in the folded state (as shown in FIG. 2D). It should be noted that, in this embodiment of this application, another method may further be used to determine the folded state or the unfolded state of the electronic device. This is not limited.

The electronic device may implement audio functions by using the audio module 160, the speaker 161, the receiver 162, the microphone 163, the headset jack 164, the application processor, and the like, for example, an audio playing function, a recording function, and a voice wake-up function.

The audio module 160 may be configured to convert digital audio information into an analog audio signal for output, and is also configured to convert an analog audio input into a digital audio signal. The audio module 160 may be further configured to encode and/or decode an audio signal. For example, the audio module 160 may be disposed in the processor 110, or some functional modules of the audio module 160 may be disposed in the processor 110.

The speaker 161, also referred to as a "loudspeaker", is configured to convert an audio electrical signal into a sound signal. For example, the electronic device may listen to music, listen to a hands-free call, or emit a voice prompt light by using the speaker 161.

The receiver 162, also referred to as an "earpiece", is configured to convert an audio electrical signal into a sound signal. For example, when the electronic device answers a call or voice information, the receiver 162 may be placed close to a human ear to answer the call.

The microphone 163, also referred to as a "mike" or "mic", is configured to collect a sound (for example, an ambient sound, including a sound made by a person or a sound made by a device), and convert the sound into audio electrical data. When making a call or sending voice information, the user may make a sound by using the human mouth close to the microphone 163, and the microphone 163 collects the sound made by the user. It should be noted that at least one microphone 163 may be disposed in the electronic device. For example, two microphones 163 are disposed in the electronic device. A noise reduction function may be further implemented in addition to implementing sound collection. For another example, three, four, or more microphones 163 may alternatively be disposed in the electronic device, so that sound source identification, a directional recording function, and the like may be further implemented in addition to implementing sound collection and noise reduction.

The headset jack 164 is configured to connect to a wired headset. The headset jack 164 may be the USB interface 172, or may be a 3.5 mm open mobile terminal platform (open mobile terminal platform, OMTP) standard interface or cellular telecommunications industry association of the USA (cellular telecommunications industry association of the USA, CTIA) standard interface.

The SIM card interface 171 is configured to connect to a SIM card. The SIM card may be inserted into the SIM card interface 171 or removed from the SIM card interface 171, to implement contact with or separation from the electronic device. The electronic device may support one or N SIM card interfaces, where N is a positive integer greater than 1. The SIM card interface 171 may support a nano-SIM card, a micro-SIM card, a SIM card, and/or the like. A plurality of cards may be inserted into a same SIM card interface 171 at the same time. The plurality of cards may be of a same type or different types. The SIM card interface 171 may alternatively be compatible with different types of SIM cards. The SIM card interface 171 may alternatively be compatible with an external storage card. The electronic device interacts with a network by using the SIM card, to implement functions such as calling and data communication. In some embodiments, the electronic device may further use an eSIM, namely, an embedded SIM card. The eSIM card may be embedded into the electronic device, and cannot be separated from the electronic device.

The USB interface 172 is an interface that conforms to a USB standard specification, and may be specifically a mini USB interface, a micro USB interface, a USB type-C interface, or the like. For example, the USB interface 172 may be configured to connect to a charger to charge the electronic device, or may be configured to connect the electronic device to a headset, and play audio by using the headset. When the USB interface 172 may be connected to the headset, it may be understood that the USB interface 172 is used as a headset interface. For another example, in addition to being used as the headset interface, the USB interface 172 may be further configured to connect to another electronic device, for example, an AR device or a computer.

The charging management module 180 is configured to receive a charging input from the charger. The charger may be a wireless charger or a wired charger. In some embodiments of wired charging, the charging management module 180 may receive a charging input of a wired charger through the USB interface 172. In some embodiments of wireless charging, the charging management module 180 may receive a wireless charging input through a wireless charging coil of the electronic device. When charging the battery 182, the charging management module 180 may further supply power to the electronic device by using the power management module 180.

The power management module 181 is configured to connect the battery 182, the charging management module 180, and the processor 110. The power management module 181 receives inputs/an input from the battery 182 and/or the charging management module 180, and supplies power to the processor 110, the internal memory 121, the first camera 131, the second camera 132, the first display screen 141, the second display screen 142, and the like. The power management module 181 may be further configured to monitor parameters such as a battery capacity, a battery cycle count, and a battery health status (electric leakage or impedance). In some other embodiments, the power management module 181 may alternatively be disposed in the processor 110. In some other embodiments, the power management module 181 and the charging management module 180 may alternatively be disposed in a same component.

The mobile communication module 191 may provide a wireless communication solution that is applied to the electronic device and that includes 2G/3G/4G/5G. For example, the mobile communication module 191 may include at least one filter, a switch, a power amplifier, and a low noise amplifier (low noise amplifier, LNA).

The wireless communication module 192 may provide a wireless communication solution that is applied to the electronic device and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 192 may be one or more components integrating at least one communication processor module.

In some embodiments, an antenna 1 of the electronic device is coupled to the mobile communication module 191, and an antenna 2 is coupled to the wireless communication module 192, so that the electronic device can communicate with another device. Specifically, the mobile communication module 191 may communicate with another device through the antenna 1, and the wireless communication module 192 may communicate with another device through the antenna 2.

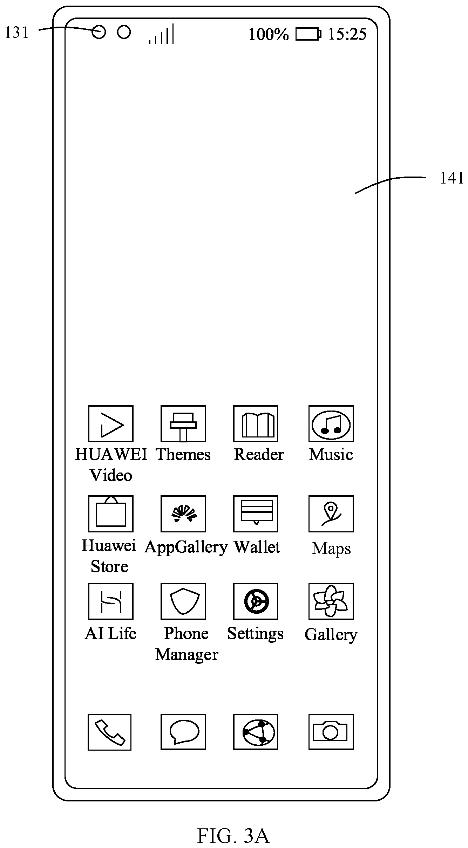

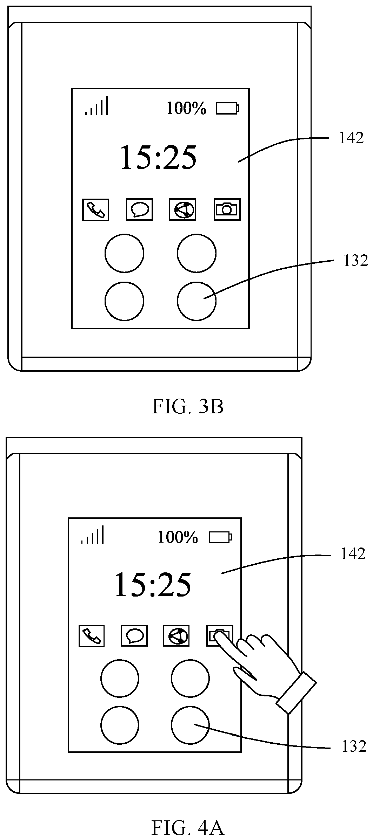

It should be understood that all the following embodiments may be implemented in an electronic device having the foregoing hardware structure. Refer to FIG. 3A and FIG. 3B. The electronic device displays graphical user interfaces (graphical user interfaces, GUIs) on the first display screen 141 and the second display screen 142. For ease of description, the GUI is briefly referred to as a user interface below.

FIG. 3A is a schematic diagram of a user interface displayed on the first display screen 141 of the electronic device. For example, as shown in FIG. 3A, the user interface displayed on the first display screen 141 may include a status bar, a home screen, and a dock bar. The status bar may include a name of an operator (for example, China Mobile), time, signal strength, current remaining battery power, and the like. It may be understood that, in some other embodiments, the status bar may further include another icon, for example, a Bluetooth icon, a Wi-Fi icon, or an Alarm icon. The home screen includes icons of a plurality of applications. The dock bar may include an icon of a commonly used application, or the like.

FIG. 3B is a schematic diagram of a user interface displayed on the second display screen 142 of the electronic device. For example, as shown in FIG. 3B, the user interface displayed on the second display screen 142 may include a status bar and a home screen. For example, the status bar may include signal strength, current remaining battery power, and the like. It may be understood that, in some other embodiments, the status bar may further include another icon, for example, a Bluetooth icon, a Wi-Fi icon, or an Alarm icon. The home screen includes icons of a plurality of applications, for example, time, Calendar, a Camera icon, a Phone icon, a Messages icon, and an Email icon.

The electronic device with the foldable screen (for example, the electronic device shown in FIG. 2) is used as an example below to describe changes of some example user interfaces corresponding to the display control method for the electronic device in embodiments of this application. For example, for ease of description, in the following embodiments, the first display screen 141 is referred to as the interior screen, the second display screen 142 is referred to as the exterior screen, the first camera 131 is referred to as the front-facing camera, and the second camera 132 is referred to as the rear-facing camera.

As shown in FIG. 4A and FIG. 4B, FIG. 5A and FIG. 5B, and FIG. 6A and FIG. 6B, the following uses Example 1 to Example 3 as examples to describe changes of user interfaces displayed on the exterior screen when the electronic device is in the folded state, or changes of user interfaces displayed on the interior screen and the exterior screen when the electronic device is in the folded state, and then, the electronic device is unfolded.

### Example 1:

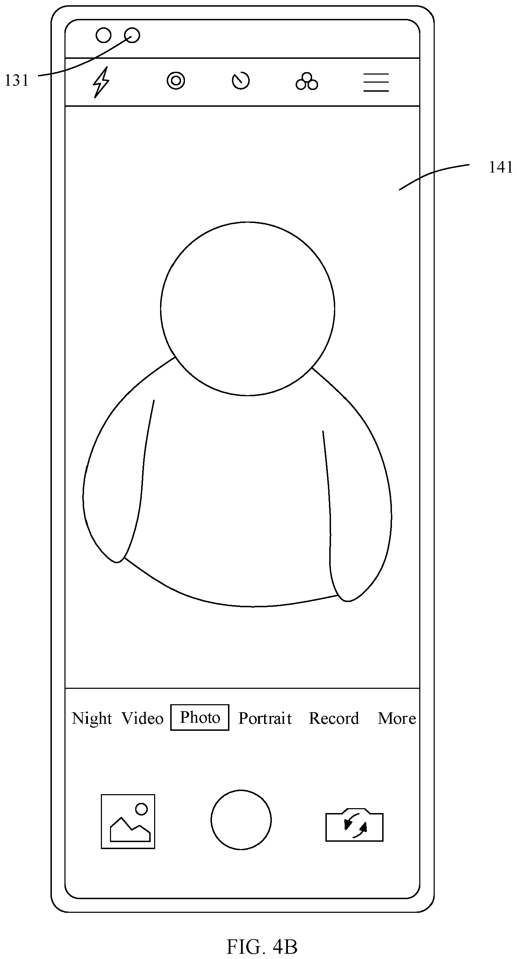

Refer to FIG. 3B, FIG. 4A, and FIG. 4B. When the electronic device is in the folded state, a user interface displayed on the exterior screen may be shown in FIG. 3B.

Certainly, it may be understood that, when the electronic device is in the folded state, the exterior screen may alternatively be in a screen-off state, a screen-locked state, or the like, and the user interface shown in FIG. 3B is not displayed. It may be understood that when the exterior screen is in the screen-off state, the user may light the exterior screen by using a gesture operation, a trigger instruction, a voice instruction, or the like. For example, the gesture operation may be an operation such as tapping, double-tapping, pressing, and sliding on the exterior screen. For another example, the trigger instruction may be receiving an incoming call, an SMS message, or the like. This is not limited.

FIG. 4A is a schematic diagram of a user interface on the exterior screen when the electronic device is in the folded state and the user performs an operation on one of the application icons (for example, the Camera icon) on the exterior screen shown in FIG. 3B (for example, taps the Camera icon). For example, when the electronic device is in the folded state, and after the user taps the Camera icon, if the user does not perform another action (for example, unfold the electronic device), the electronic device may be set to turn on a camera (for example, the second camera 132) on the exterior screen, so that the user performs photographing by using the rear-facing camera (for example, the second camera 132) and the exterior screen.

Optionally, when the electronic device is in the folded state, and after the user taps the Camera icon, if the user does not perform another action (for example, unfold the electronic device), the electronic device may be set to turn on the camera on the exterior screen, so as to perform photographing by using the camera (for example, the second camera 132) on the exterior screen; and the electronic device is set to display prompt information on the exterior screen. For example, the exterior screen indicates that the electronic device may be unfolded to perform preview on the interior screen.

FIG. 4B is a schematic diagram of a user interface on the interior screen when the user performs the operation according to FIG. 4A and unfolds the electronic device (in other words, the electronic device is in the unfolded state) within preset time (for example, 1 to 2 seconds). For example, as shown in FIG. 4B, when the user taps the Camera icon on the exterior screen, and then unfolds the electronic device within the preset time (for example, 1 to 2 seconds), it indicates that the user may want to use a camera (for example, the first camera 131) on the interior screen. In this case, the electronic device may be set to switch to the interior screen when the electronic device is unfolded within the preset time, switch the rear-facing camera (for example, the second camera 132) to the front-facing camera (for example, the first camera 131), and display an application interface of the Camera icon on the interior screen, for example, enter a selfie interface. In other words, when the electronic device is in the folded state, and then the user performs the operation on one of the application icons (for example, the Camera icon) on the exterior screen (for example, taps the Camera icon), and unfolds the electronic device within the preset time, the electronic device switches to the interior screen, and correspondingly displays the application interface of the application icon.

For another example, when the electronic device is in the folded state, and after the user taps the Camera icon, if the user unfolds the electronic device after preset time (for example, 2 to 5 seconds), it indicates that an exterior screen picture may be too small to be suitable for preview, and the user may want a larger preview picture. In this case, the electronic device may be set to switch to the interior screen when the electronic device is unfolded, so that the user can preview a picture conveniently; but still use the rear-facing camera (for example, the second camera 132) to perform photographing. In this case, the interior screen is used to help the user to preview a shot picture.

In other words, when the electronic device enters or switches to the user interface on the interior screen, and displays the application interface of the Camera icon on the interior screen, the interior screen of the electronic device may be used in combination with the camera (for example, the first camera 131, namely, the front-facing camera) on the interior screen and/or the camera (for example, the second camera 132, namely, the rear-facing camera) on the exterior screen to perform photographing. For example, as shown in FIG. 4B, when the electronic device enters or switches to the user interface on the interior screen, and displays the application interface of the Camera icon on the interior screen, the interior screen of the electronic device may perform selfie in combination with the camera (for example, the first camera 131) on the interior screen or switch to the camera on the interior screen to perform selfie.

Certainly, as described above, the electronic device determines, based on whether the electronic device is unfolded within the preset time, whether to perform camera switching. For example, when the electronic device is unfolded within the preset time, the electronic device is switched to the front-facing camera. For another example, when the electronic device is unfolded after the preset time, no camera switching is performed, and the rear-facing camera is still used. Certainly, it may be understood that in another embodiment, whether to perform camera switching is not limited to being determined based on the preset time, and whether to perform camera switching may alternatively be determined by using another condition. This is not specifically limited herein. For example, in one embodiment, determining may be performed by using eyes. For example, when it is determined that the eyes of the user focus on the exterior screen, the electronic device may be set to enable the rear-facing camera (for example, the second camera 132). When it is detected that the eyes of the user do not focus on the exterior screen, the electronic device may be set to switch to the front-facing camera (for example, the first camera 131).

### Example 2:

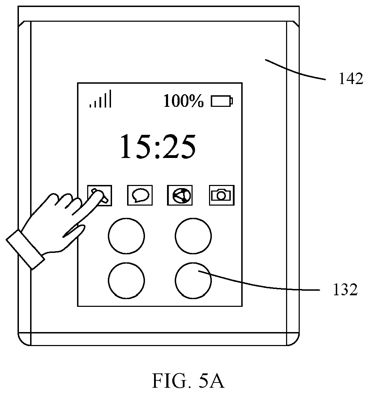

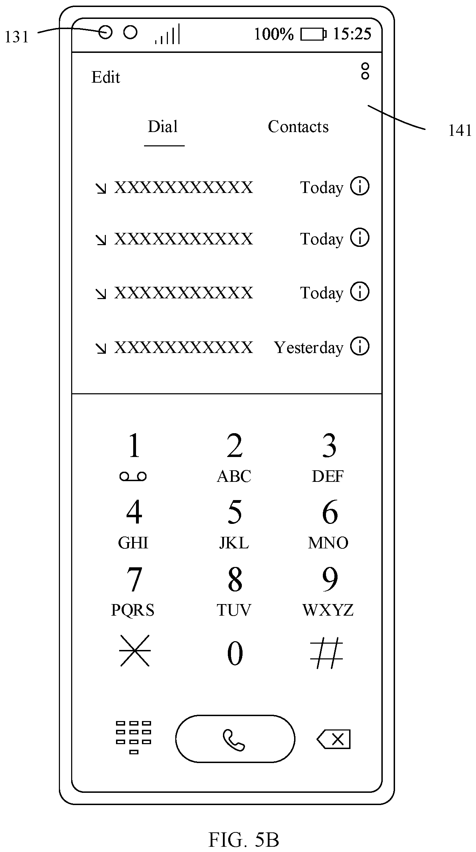

Refer to FIG. 3B, FIG. 5A, and FIG. 5B. When the electronic device is in the folded state, a user interface displayed on the exterior screen may be shown in FIG. 3B. Certainly, it may be understood that, when the electronic device is in the folded state, the exterior screen may also be in a screen-off state, a screen-locked state, or the like, and the user interface shown in FIG. 3B is not displayed.

FIG. 5A is a schematic diagram of a user interface on the exterior screen when the electronic device is in the folded state and the user performs an operation on one of the application icons (for example, the Phone icon) on the exterior screen shown in FIG. 3B (for example, taps the Phone icon). For example, when the electronic device is in the folded state, and after the user taps the Phone icon, if the user does not perform another action (for example, unfold the electronic device), the electronic device may be set to directly display a call record, a contact, a dialer, and the like on the exterior screen, or any combination thereof.

Optionally, the dialer is used as an example. When the electronic device is in the folded state, and after the user taps the Phone icon, if the user does not perform another action (for example, unfold the electronic device), the electronic device may be set to directly display the dialer, so as to help the user to directly make a call on the exterior screen.

For another example, when there is a missed call and the user does not unfold the electronic device, the electronic device may be set to display the missed call on the exterior screen, and directly dial back the call by using a displayed dialer.

For another example, in another embodiment, when the electronic device is in the folded state, and an incoming call is displayed on the exterior screen, a call screen may be displayed on the exterior screen. For example, an answer icon, a hang-up icon, a status bar are displayed (for example, a caller number, a caller region, a caller name, and whether a call is a nuisance call are displayed). In a first case, when the user operates the answer icon, in response to a user operation, the electronic device may directly answer the call in the folded state in combination with an earpiece of the electronic device, without unfolding the electronic device.

In a second case, if no earpiece is disposed on the exterior screen of the electronic device, or a location of the earpiece is not suitable for receiving a sound, the electronic device may directly answer the call in the folded state by using an external speaker, without unfolding the electronic device.

In a third case, when the incoming call is displayed on the exterior screen, and the electronic device cannot answer the call in the folded state, the electronic device may be set to be unfolded, so as to switch to a user interface on the interior screen, and perform a corresponding operation (for example, answer or hang up).

In a fourth case, when the incoming call is displayed on the exterior screen, but the electronic device cannot answer the call in the folded state, the electronic device may be set to directly answer the call by unfolding the electronic device.

It may be understood that operations in the foregoing four cases may be predefined or set on a Settings icon on the first display screen 141.

FIG. 5B is a schematic diagram of a user interface on the interior screen when the user performs the operation according to FIG. 5A and unfolds the electronic device (in other words, the electronic device is in the unfolded state). For example, as shown in FIG. 5B, when the user taps the Phone icon on the exterior screen, and then unfolds the electronic device, the electronic device may be set to switch to the interior screen, and display an application interface of the Phone icon on the interior screen, so as to help the user to perform an operation such as making a call. In other words, when the electronic device is in the folded state, and then the user performs the operation on one of the application icons (for example, the Phone icon) on the exterior screen (for example, taps the Phone icon), and unfolds the electronic device, the electronic device switches to the interior screen, and correspondingly displays the application interface of the application icon.

### Example 3:

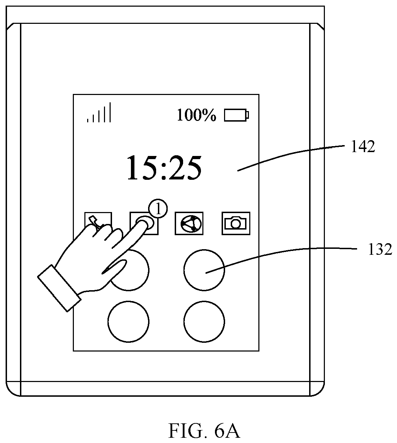

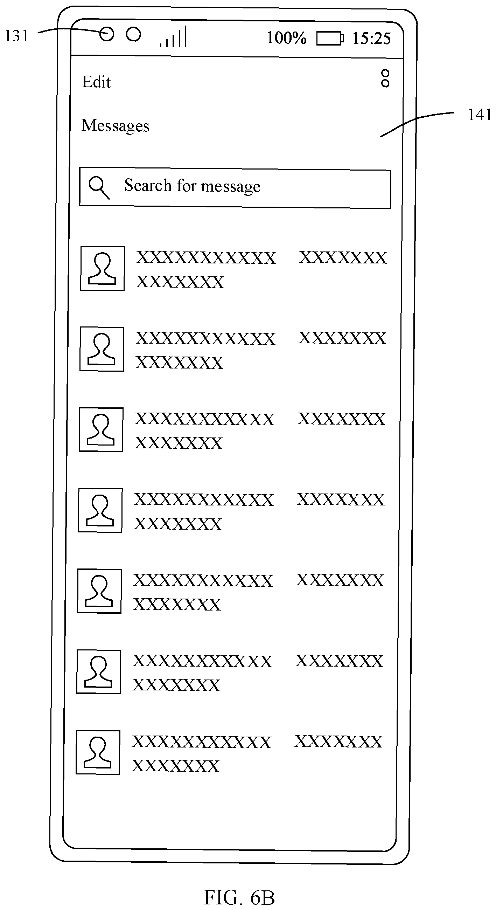

Refer to FIG. 3B, FIG. 6A, and FIG. 6B. When the electronic device is in the folded state, a user interface displayed on the exterior screen may be shown in FIG. 3B. Certainly, it may be understood that, when the electronic device is in the folded state, the exterior screen may also be in a screen-off state, a screen-locked state, or the like, and the user interface shown in FIG. 3B is not displayed.

FIG. 6A is a schematic diagram of a user interface on the exterior screen when the electronic device is in the folded state, the exterior screen receives a message reminder (for example, indicating that one or more new messages are received), and the user taps the message.

For another example, when the electronic device is in the folded state, and the user taps the message, the user may further directly perform viewing or other operations on the exterior screen without unfolding the electronic device.

For another example, in another embodiment, when the exterior screen of the electronic device receives the message, for content (for example, information needs to be replied) that cannot be directly operated on the exterior screen, when the user taps the message, the exterior screen may prompt information such as "please unfold the mobile phone for use".

FIG. 6B is a schematic diagram of a user interface on the interior screen when the user performs the operation according to FIG. 6A (in other words, taps the message on the exterior screen) and unfolds the electronic device (in other words, the electronic device is in the unfolded state). As shown in FIG. 6B, when the user taps the message on the exterior screen, and then unfolds the electronic device, the electronic device may be set to switch to the interior screen, and display a corresponding Messages application interface on the interior screen. In this way, the user may view or perform other operations on the message (for example, reply to the message).

For another example, when the user taps the message on the exterior screen, but the user directly unfolds the electronic device without performing an operation, the electronic device may be set to switch to the interior screen. In addition, the interior screen enters the home screen or an application interface (for example, refer to FIG. 3A) displayed before the foldable screen (namely, the first display screen 141) is closed (in other words, is in the folded state) last time.

It may be understood that, when the interior screen of the electronic device enters the home screen or the application interface displayed before the foldable screen (namely, the first display screen 141) is closed last time, the user interface on the interior screen may further configured with or display a message drop-down menu, prompt information, or the like. In this way, it may be convenient for the user to drop down a menu or tap the prompt information, so as to view and/or process a message.

It may be understood that, in the foregoing Example 1 to Example 3, when the electronic device enters or switches to the user interface on the interior screen, the exterior screen of the electronic device may be in the screen-off state and/or screen-locked state, or the exterior screen is kept locked and a default user interface is displayed. This is not limited herein. The default user interface may include information such as time and a date. Specifically, the user may set, based on a requirement, information displayed on the default user interface, for example, a displayed preset pattern.

Optionally, in the foregoing Example 1 to Example 3, when the electronic device enters or switches to the user interface on the interior screen, in other words, when the electronic device switches from the folded state to the unfolded state, if the user closes the electronic device again (in other words, the electronic device switches to the folded state again), the exterior screen of the electronic device may be set to the screen-off state and/or the screen-locked state, or the exterior screen is kept locked and the default user interface is displayed. This is not limited herein. For example, the user taps the message on the exterior screen. When the electronic device switches from the folded state to the unfolded state, and then the user closes the electronic device, the electronic device may be set to display information such as "SMS message delivered" or "SMS message read" on the exterior screen.

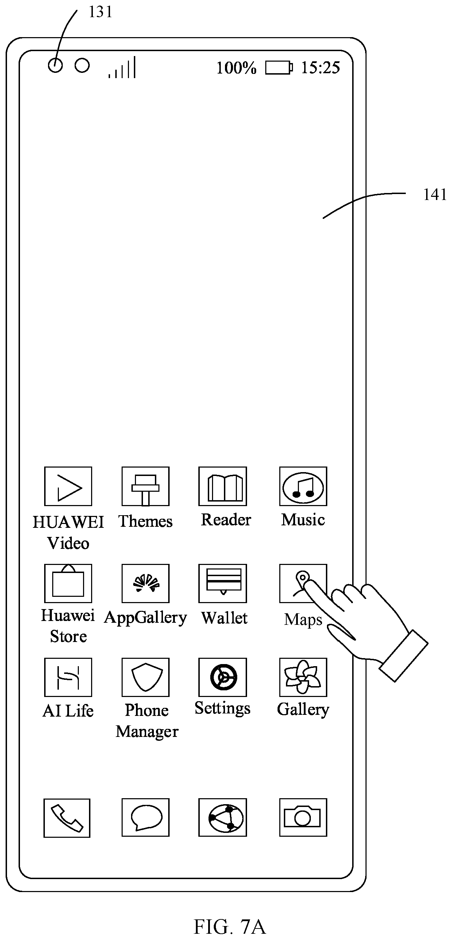

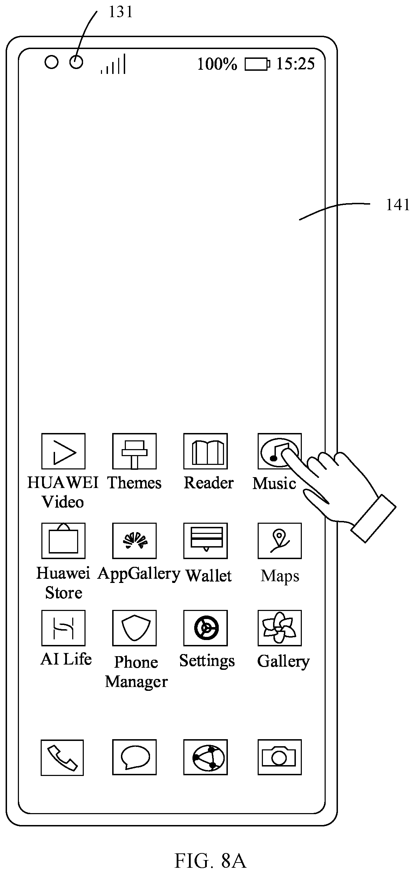

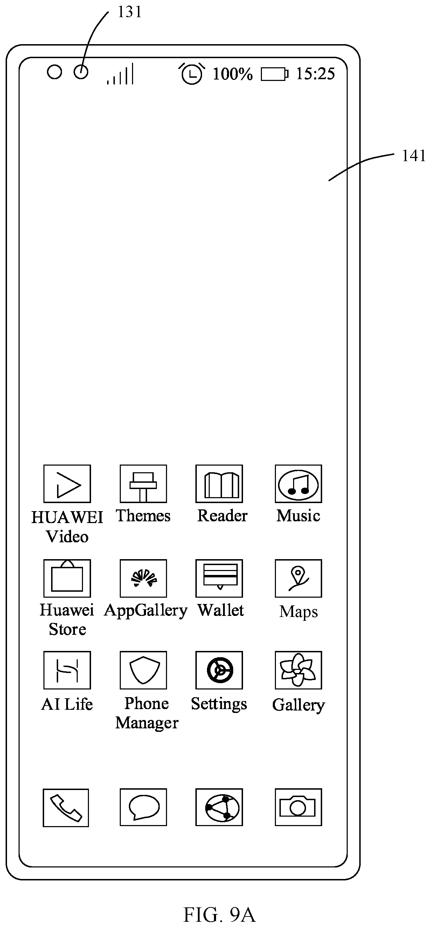

As shown in FIG. 7A to FIG. 7D(2), FIG. 8A to FIG. 8C, and FIG. 9A to FIG. 9C, the following uses Example 4 to Example 6 as examples to describe changes of user interfaces on the interior screen and the exterior screen when the electronic device is in the unfolded state and then the electronic device is closed.

### Example 4:

FIG. 7A to FIG. 7D(2) are schematic diagrams of user interfaces on the interior screen when the interior screen is in use and one of the application icons (for example, a navigation software icon) in the user interface shown in FIG. 3A is operated.

That the interior screen of the electronic device is in use may be understood as follows: When the interior screen of the electronic device is in the unfolded state, a corresponding user interface such as a home screen or a user interface of an application is displayed on the interior screen. When the corresponding user interface is displayed on the interior screen, the user may perform a corresponding operation based on a requirement, so that the electronic device performs corresponding display on the interior screen in response to the operation of the user.

For example, when the interior screen of the electronic device is in the unfolded state and the screen is not locked, when the home screen is displayed on the interior screen, the electronic device detects an operation that the user taps an application icon (for example, a video playing software icon) on the home screen, and displays a user interface of video playing software on the interior screen in response to the operation of tapping the video playing software icon. For another example, when the interior screen of the electronic device is in the unfolded state and the screen is not locked, when a user interface of an application is displayed on the interior screen, the user may perform a corresponding operation on a virtual button (or a virtual key) included in the user interface, to implement corresponding control. For example, when the user interface of the video playing software is displayed on the interior screen, and the electronic device detects an operation (for example, an operation of clicking a virtual button for controlling full-screen display of a video) performed by the user in the user interface of the video playing software, the electronic device displays and plays the corresponding video in full screen on the interior screen in response to the foregoing operation, so that the user can watch the corresponding video.

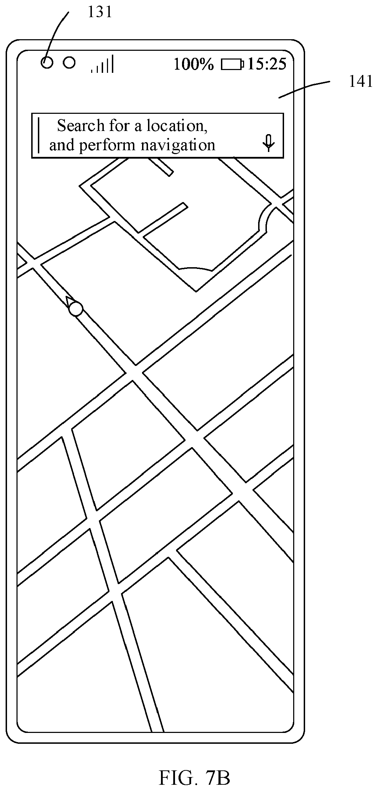

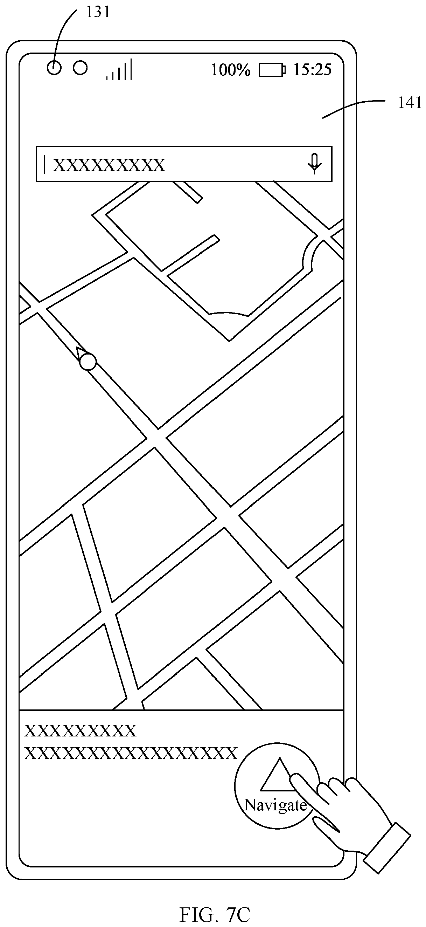

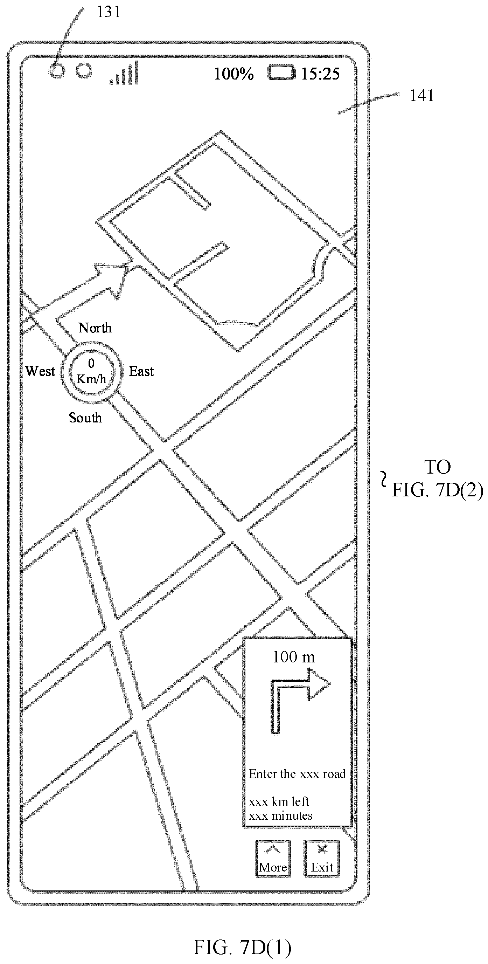

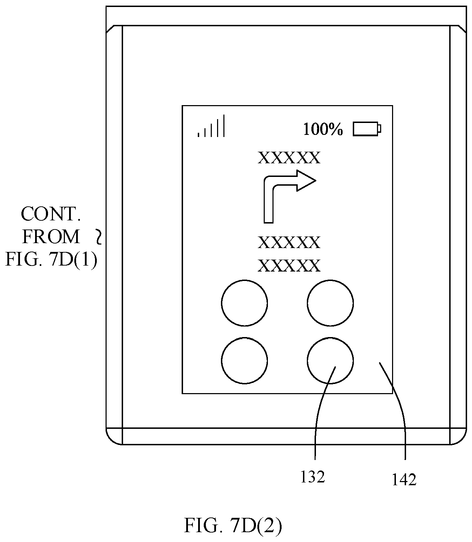

For another example, as shown in FIG. 7A to FIG. 7D(2), when the icon of the navigation software (refer to FIG. 7A, referred to as a first operation below) is operated (for example, clicked) on the interior screen, a main interface of the navigation software (refer to FIG. 7B) is first displayed on the interior screen. Then, when the user interface (namely, the main interface) of the icon of the navigation software is displayed, and an operation of searching for a route by the user on the main interface (refer to FIG. 7C, referred to as a second operation below) is detected, a corresponding route search result is displayed on the interior screen in response to the operation of searching for the route. To be specific, a map interface is displayed (refer to FIG. 7D(1)), so that the user can easily reach a corresponding destination.

Generally, the user interface displayed on the interior screen of the electronic device is a user interface of the electronic device running an application in the foreground. The electronic device may run one or more applications in the foreground. In some embodiments, the electronic device may run one or more applications in the background while running one or more applications in the foreground. For example, if the application running in the foreground of the electronic device is the video playing software, the user interface of the video playing software is displayed on the interior screen. For example, when the user interface of the video playing software is displayed on the interior screen, the electronic device may further run another application in the background, for example, payment software.

FIG. 7D(2) is a schematic diagram of a user interface on the exterior screen when the application icon shown in FIG. 7A to FIG. 7D(1) is operated, and then the electronic device is closed (in other words, the electronic device is in the folded state). For example, as shown in FIG. 7D(2), when a size of the exterior screen is small, only a part of content of the navigation software may be displayed on the exterior screen. For example, a navigation software interface is scaled down by a specific proportion and then mapped to the exterior screen for display.

For another example, when the size of the exterior screen is small, only some critical information of the navigation software interface (refer to FIG. 7D(2)) may also be displayed on the exterior screen, for example, a distance and time to a destination, a turning reminder (for example, a left turn or right turn after a quantity of meters), and a distance in meters to a speed monitoring point.

For another example, when the size of the exterior screen is large, the exterior screen may be set to continue displaying a navigation software interface, to be specific, the user interface of the navigation software displayed on the interior screen is automatically mapped to the exterior screen for display. Alternatively, for another example, when the size of the exterior screen is large, the exterior screen may also display only the critical information of the navigation interface, which may be specifically adjusted based on an actual requirement. This is not limited herein.

### Example 5:

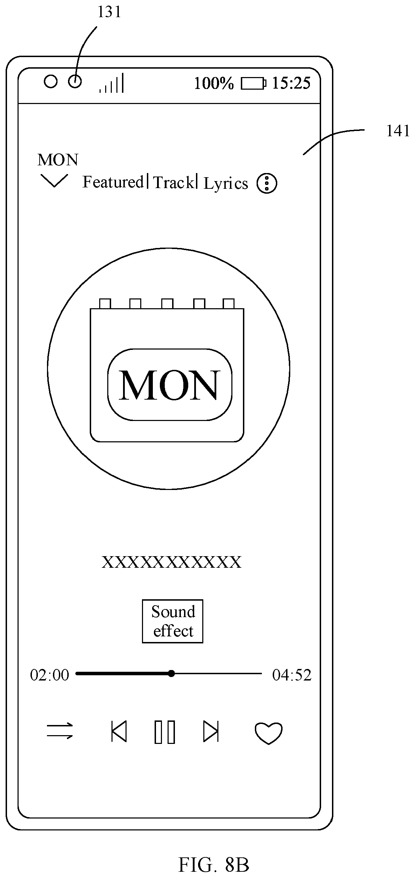

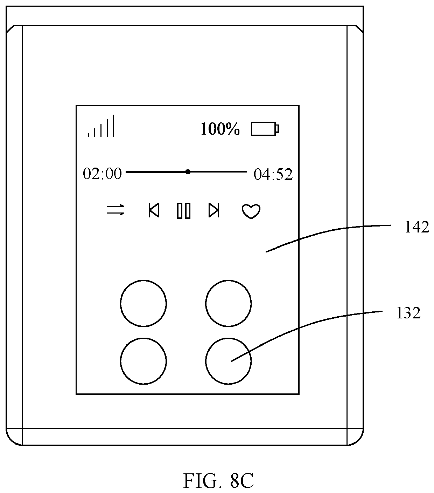

FIG. 8A and FIG. 8B are schematic diagrams of user interfaces on the interior screen when another application icon (for example, a Music icon) in the user interface shown in FIG. 3A is operated. FIG. 8C is a schematic diagram of a user interface on the exterior screen when the application icon shown in FIG. 8A and FIG. 8B is operated, and then the electronic device is closed (in other words, the electronic device is in the folded state). For example, in this case, the exterior screen may be set to display a screen-off interface and/or a screen-locked interface by default, or the exterior screen is locked and a default user interface is displayed, and a corresponding application runs in the background without stopping.

For another example, as shown in FIG. 8C, in another embodiment, when the exterior screen is locked, the exterior screen may further set and display a corresponding control button icon based on the screen-locked interface, for example, a pause key or a close key of music, to control the application running in the background.

It may be understood that, in another embodiment, the Music icon shown in FIG. 8A may alternatively be replaced with another application that can be converted to run in the background, for example, recording or running counting. This is not limited herein. For example, when the user enables a recording function, and then closes the electronic device, the electronic device may be set to switch recording to background running, and display a control such as pausing recording on the exterior screen.

For another example, when the user enables a running counting function, and then closes the electronic device, the electronic device may be set to display information such as a running heart rate, a running distance, pause counting, and end running on the exterior screen.

### Example 6:

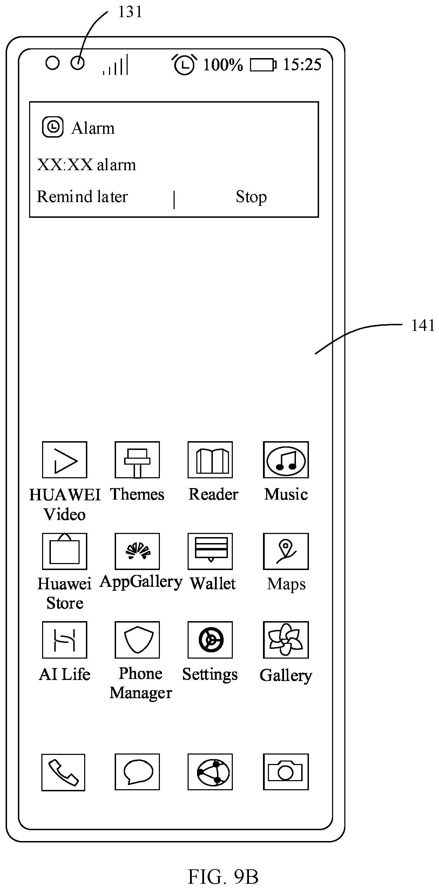

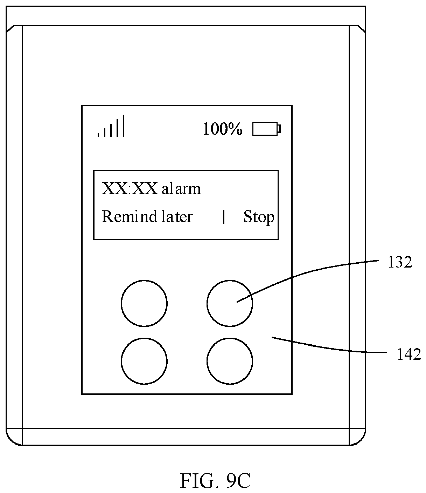

FIG. 9A and FIG. 9B are schematic diagrams of user interfaces on the interior screen when an alarm on the interior screen rings. FIG. 9C is a schematic diagram of a user interface on the exterior screen when the alarm in FIG. 9B rings, and then the electronic device is closed (in other words, the electronic device is in the folded state). For example, as shown in FIG. 9C, in this case, the electronic device may be set to switch to the exterior screen, and the exterior screen continues to display a user interface in which the alarm rings.

For another example, in another embodiment, in this case, the exterior screen of the electronic device may be further set to pause the alarm, and set to a screen-off state.

For another example, in this case, the exterior screen of the electronic device may be set to a locked screen and an off screen, or the exterior screen may be set to a locked screen but a default user interface is displayed. This is not limited herein.

It may be understood that, in another embodiment, the Alarm icon shown in FIG. 9A may alternatively be replaced with an incoming call or an icon during a call. This is not limited herein. The icon in a call is used as an example. For example, in a first scenario, when the user is not connected to a Bluetooth device and is in a call, if the electronic device is closed, the electronic device may be set to hang up the call. In a second scenario, when the user connects to a device by using Bluetooth and is in a call, if the electronic device is closed, the electronic device may be set to continue the call. In other words, in the second scenario, even if the user closes the electronic device at this time, the call can continue to be maintained without hanging up. In a third scenario, when the user is in a video call, if the electronic device is not connected to Bluetooth, the electronic device may be set to hang up the call when the electronic device is closed (in other words, the electronic device is in the folded state). In a fourth scenario, when the user is in a video call, if the electronic device is connected to Bluetooth, the electronic device may be set to hang up the video call when the electronic device is closed (in other words, the electronic device is in the folded state), but the call continues.

For another example, when an application icon (for example, the Settings icon) other than the application icons in Example 4, Example 5, and Example 6 is operated on the interior screen, and then the electronic device is closed, the exterior screen of the electronic device may be set to a screen-off state and/or a screen-locked state by default, or the exterior screen is kept locked and a default user interface is displayed. This is not limited herein.

It may be understood that, as shown in Example 4 to Example 6, when the interior screen of the electronic device is changed from the unfolded state to the folded state, the electronic device may further turn off the interior screen. It should be noted that when the interior screen is folded to the folded state, a user interface or the like cannot be displayed normally to the user on the interior screen. Therefore, to reduce power consumption of the electronic device, the interior screen may be turned off. Turning off the interior screen may be understood as follows: The interior screen is off and locked, or the interior screen is off but unlocked. In addition, when the electronic device folds the interior screen to the folded state, the user cannot normally use the interior screen, in other words, the user cannot perform a normal operation on the interior screen to control the electronic device.

It may be understood that, in Example 4 to Example 6, in the foregoing case (to be specific, the electronic device switches from the unfolded state to the folded state), if the user unfolds the electronic device again (in other words, the electronic device switches to the unfolded state again), the electronic device may be set to switch to the interior screen, and enter a home screen or an application interface displayed before the foldable screen (namely, the first display screen 141) is closed last time. Alternatively, the interior screen may be set to restart or display the application that can be converted to run in the background. This is not specifically limited herein. Navigation information in Example 4 is used as an example. When the electronic device switches from the unfolded state to the folded state, if the user unfolds the electronic device again (in other words, the electronic device switches to the unfolded state again), the electronic device may be set to switch to the interior screen, enlarge the navigation information displayed on the exterior screen, and display the enlarged navigation information on the interior screen.

The Music icon in Example 5 is used as an example. When the electronic device switches from the unfolded state to the folded state, and then the user unfolds the electronic device (in other words, the electronic device switches to the unfolded state again), the electronic device may be set to switch to the interior screen, and enter the home screen or the application interface displayed before the foldable screen (namely, the first display screen 141) is closed last time. Alternatively, the interior screen may be set to restart or display a music application, or the like. This is not specifically limited herein.

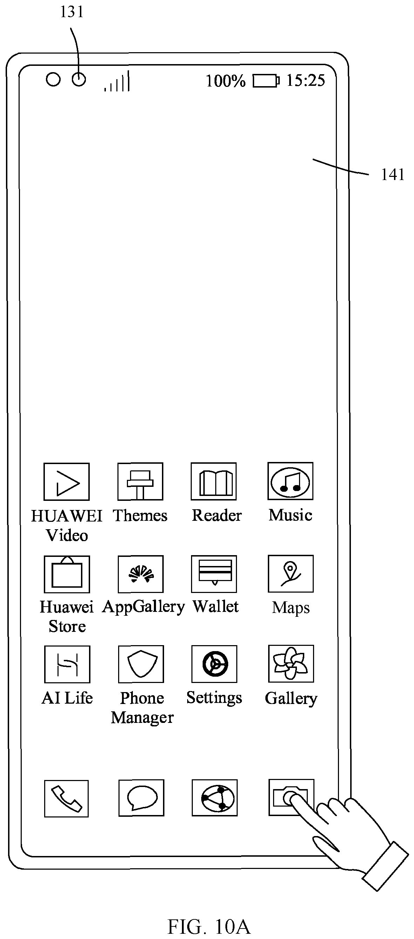

As shown in FIG. 10A to FIG. 10C, FIG. 11A and FIG. 11B, and FIG. 12A to FIG. 12C, the following uses Example 7 to Example 9 as examples to describe changes of user interfaces on the interior screen and the exterior screen when the electronic device is in the unfolded state and is not covered.

### Example 7:

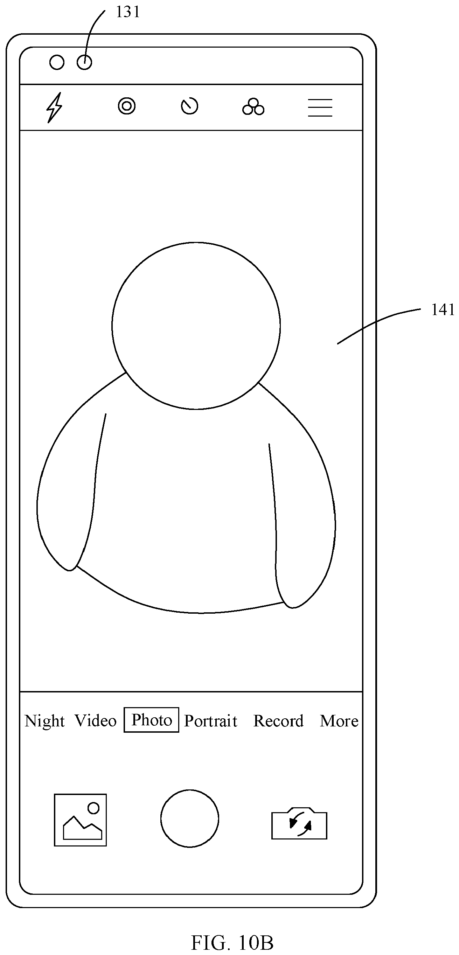

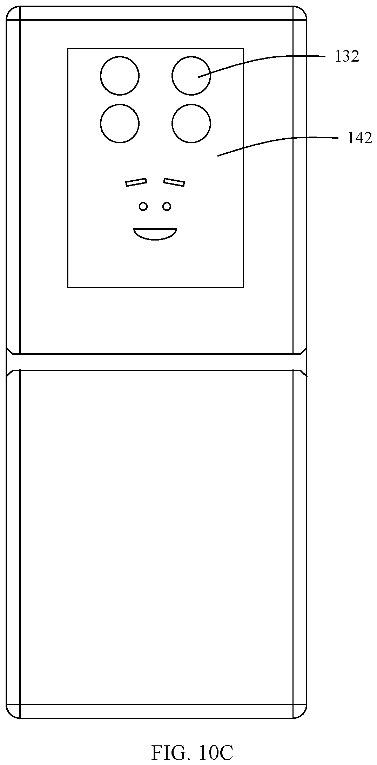

Refer to FIG. 10A and FIG. 10B. FIG. 10A and FIG. 10B are schematic diagrams of user interfaces on the interior screen when selfie is performed by using a camera on the interior screen. FIG. 10C is a schematic diagram of a user interface on the exterior screen when the electronic device is not covered (in other words, the electronic device is in the unfolded state) in a scenario shown in FIG. 10A and FIG. 10B. In this scenario, the exterior screen of the electronic device is in a screen-off state. Certainly, in another embodiment, the exterior screen of the electronic device may alternatively be set to a screen-locked state, or the screen-off state and the screen-locked state by default, or the exterior screen is kept locked and a default user interface is displayed, or a default graphic is directly displayed (as shown in FIG. 10C). This is not limited herein.

### Example 8:

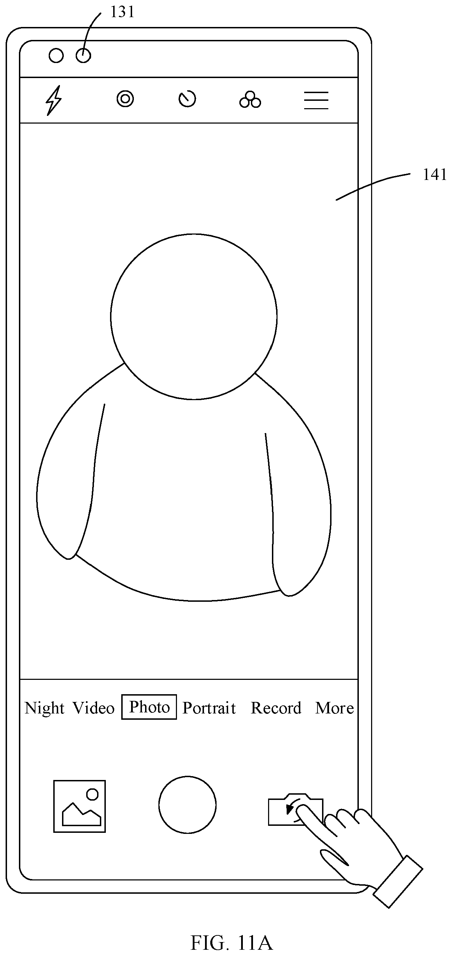

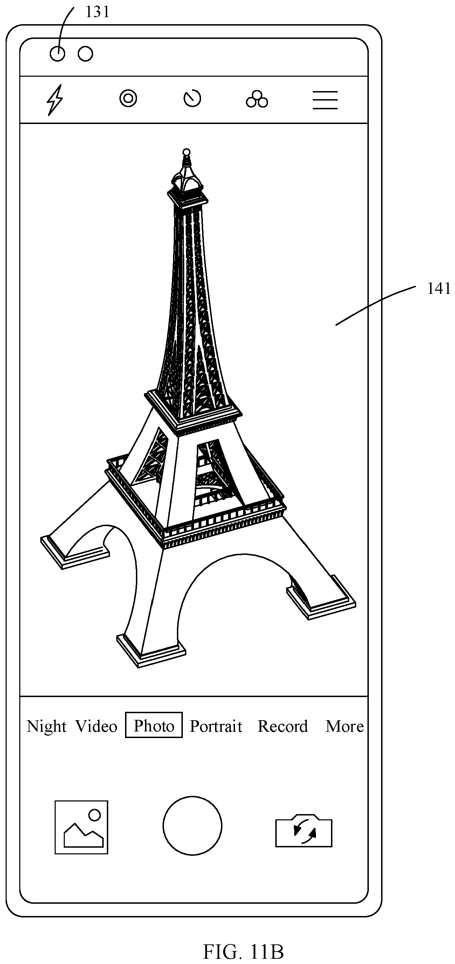

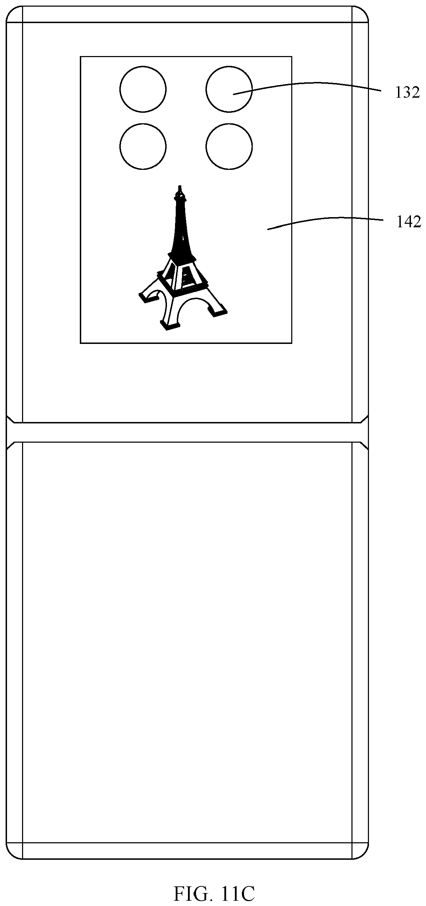

Refer to FIG. 11A and FIG. 11B. FIG. 11A and FIG. 11B are schematic diagrams of user interfaces on the interior screen when the camera is used to perform rear-facing photographing on the interior screen. FIG. 11C is a schematic diagram of a user interface on the exterior screen when the electronic device is not covered (in other words, the electronic device is in the unfolded state) in a scenario shown in FIG. 11A and FIG. 11B. As shown in FIG. 11C, in this scenario, a viewfinder interface may be displayed on the exterior screen of the electronic device.

For another example, in another embodiment, when the viewfinder interface is displayed on the exterior screen of the electronic device, the user may enable a secondary screen (namely, the exterior screen) in a camera application on the interior screen to perform a cooperative operation.

For another example, in another embodiment, the exterior screen of the electronic device is not limited to displaying the viewfinder interface, and may further directly turn off a screen or display a preset pattern. This is not limited herein.

### Example 9:

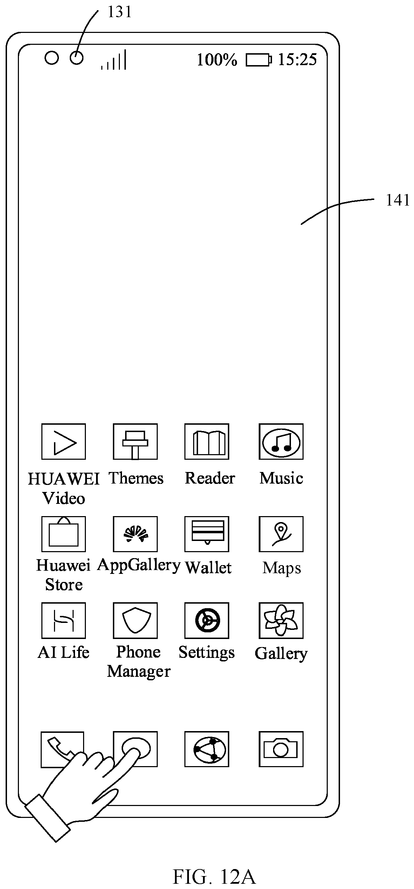

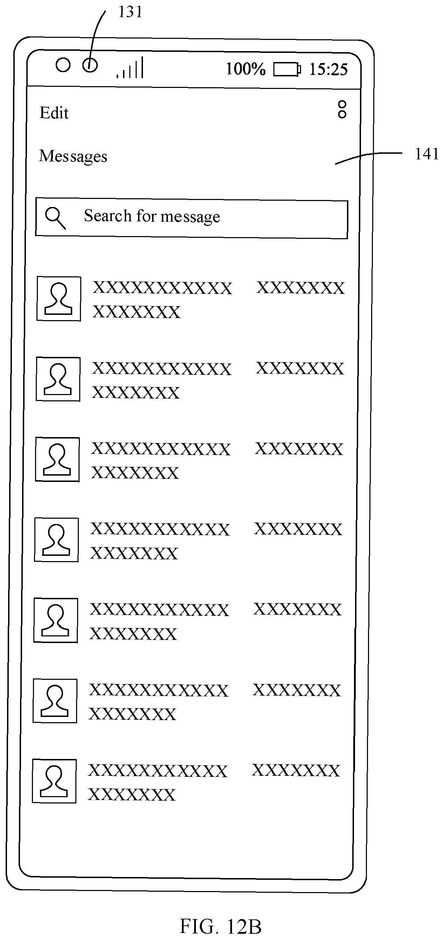

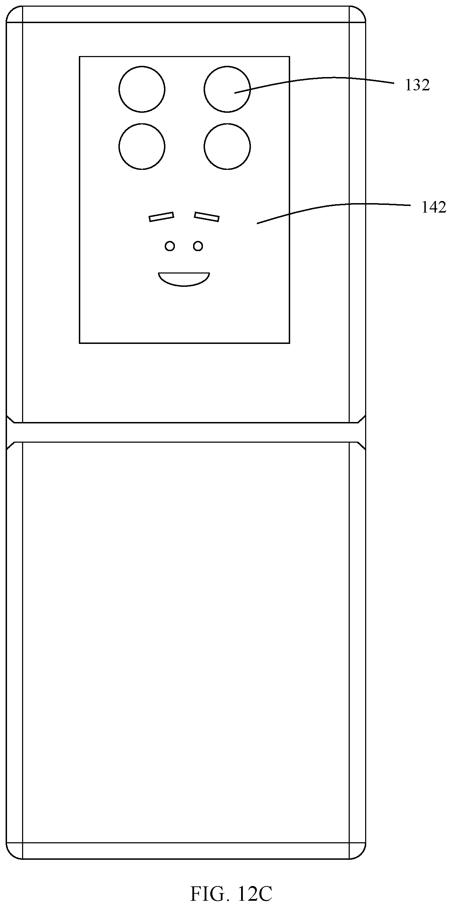

Refer to FIG. 12A and FIG. 12B. FIG. 12A and FIG. 12B are schematic diagrams of user interfaces when a message is operated on the interior screen. FIG. 12C is a schematic diagram of a user interface on the exterior screen when the electronic device is not covered (in other words, the electronic device is in the unfolded state) in a scenario shown in FIG. 12A and FIG. 12B. It may be understood that, as shown in FIG. 12C, in this scenario, the exterior screen of the electronic device may display a preset pattern (for example, a smiley face image). Certainly, in another embodiment, the exterior screen of the electronic device is not limited to displaying the preset pattern, and may further directly turn off a screen, lock a screen, and/or the like. This is not limited herein.

It may be understood that, in this embodiment of this application, the preset pattern may be static or dynamic. For example, the preset pattern may be the smiley face image or a landscape image. For another example, the preset pattern may correspondingly change with operation content of the interior screen.

It may be understood that, in another embodiment, the message shown in FIG. 12A may alternatively be replaced with an interface corresponding to an icon such as Phone, Maps, or Music. This is not limited herein.

It may be understood that the following further describes the changes of the user interfaces corresponding to the display control method for the electronic device provided in embodiments of this application by using three specific application scenarios.

### Application scenario 1:

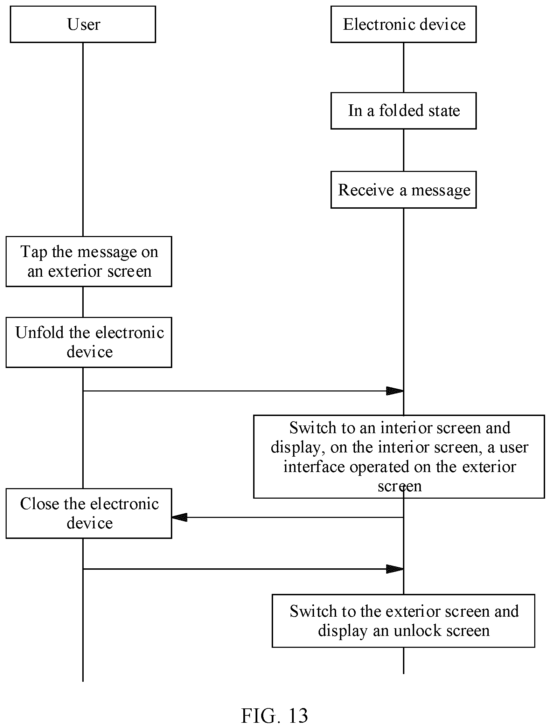

FIG. 13 mainly describes crossover from an exterior screen to an interior screen of an electronic device. The crossover means that for an electronic product such as a mobile phone, when a user is working on a screen, the user transfers to another device or screen to continue completing the work.

For example, when the electronic device is in a folded state, the electronic device receives a message by using social media software (for example, Huawei MeeTime). Then, the user taps the message on the exterior screen to perform an operation such as viewing. In an operation process, when the user unfolds the electronic device, the electronic device switches to the interior screen, and displays, on the interior screen, a user interface just operated on the exterior screen. Then, the user closes the electronic device in the user interface (in other words, the electronic device is in the folded state). The electronic device transfers to or switches to the exterior screen, and displays an unlocking interface on the exterior screen.

### Application scenario 2:

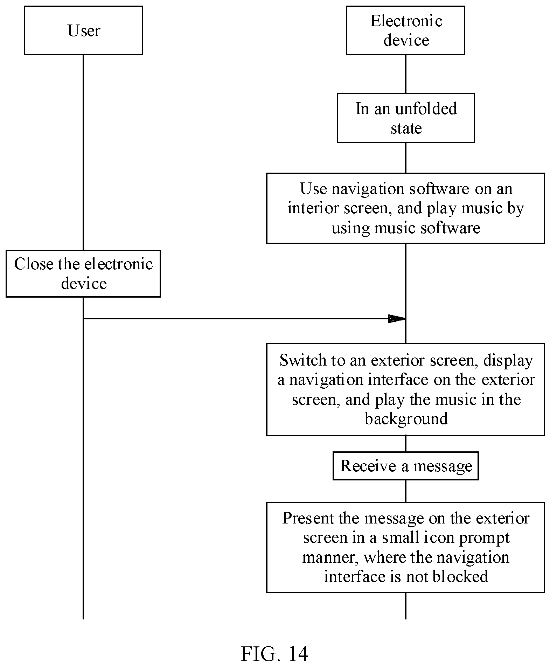

FIG. 14 mainly describes crossover from an interior screen to an exterior screen of an electronic device. The crossover means that for an electronic product such as a mobile phone, when a user is working on a screen, the user transfers to another device or screen to continue completing the work.

For example, when the electronic device is in an unfolded state, navigation is being performed by using navigation software on the interior screen of the electronic device, and music is played simultaneously by using music software. When the user closes the electronic device (in other words, the electronic device is in a folded state), the electronic device switches to the exterior screen to display a navigation software interface, and music is played in the background. Then, when the electronic device receives one piece of information, the information is presented on the exterior screen in a small icon prompt manner, and the navigation interface is not blocked. It may be understood that the electronic device may control display of the navigation software in the manner described in Example 4, and details are not described herein again.

### Application scenario 3:

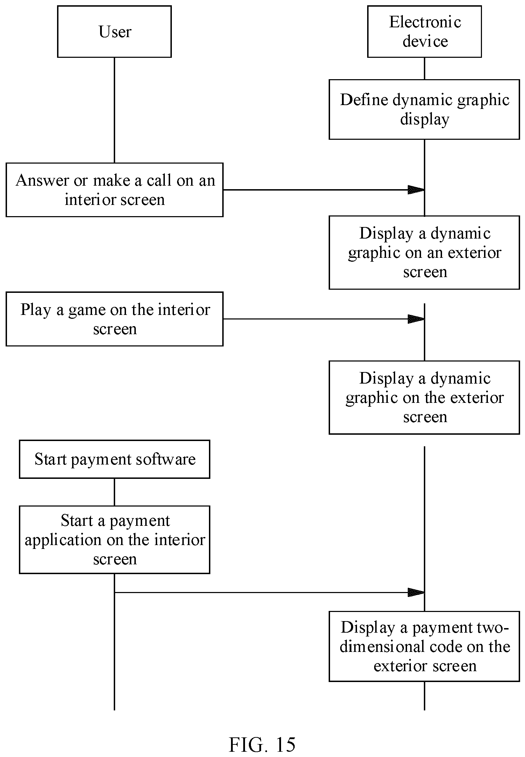

FIG. 15 mainly describes display of an interior screen and an exterior screen of an electronic device when the electronic device is not covered.

For example, first, the electronic device defines dynamic graphic display. When a user answers or makes a call on the interior screen, a dynamic graphic is displayed on the exterior screen.

For another example, when the user plays a game on the interior screen, a dynamic graphic is displayed on the exterior screen. It may be understood that in this application scenario, the electronic device may alternatively disable the dynamic graphic. In this case, when the user answers or makes the call or plays the game, the exterior screen is displayed as an off screen. This is not limited herein.

For another example, when the user needs to start payment software, the user may set to start a payment application on the interior screen, and a payment two-dimensional code is directly presented on the exterior screen. In this way, in this scenario, the user does not need to reverse a mobile phone to align with a code scanning window, and only needs to align the payment two-dimensional code displayed on the exterior screen with the code scanning window.

It may be understood that, in another embodiment, when payment needs to be completed by performing verification in a manner such as a password, face scanning on the interior screen may be directly invoked to complete verification, so as to complete the payment. This manner effectively ensures that user information is not disclosed. It may be understood that, in this embodiment of this application, payment may be completed by performing verification by using a camera on the interior screen, a 3D structured optical module, or another facial recognition module, or payment may be completed by directly pressing or touching an in-screen fingerprint on the interior screen. This is not limited herein.

Based on FIG. 1, FIG. 2A to FIG. 2F, FIG. 3A and FIG. 3B, FIG. 4A and FIG. 4B, FIG. 5A and FIG. 5B, FIG. 6A and FIG. 6B, and FIG. 7A to FIG. 7D(2), FIG. 8A to FIG. 8C, FIG. 9A to FIG. 9C, FIG. 10A to FIG. 10C, FIG. 11A to FIG. 11C, FIG. 12A to FIG. 12C, and FIG. 13 to FIG. 15. The following describes the display control method for the electronic device provided in this application.

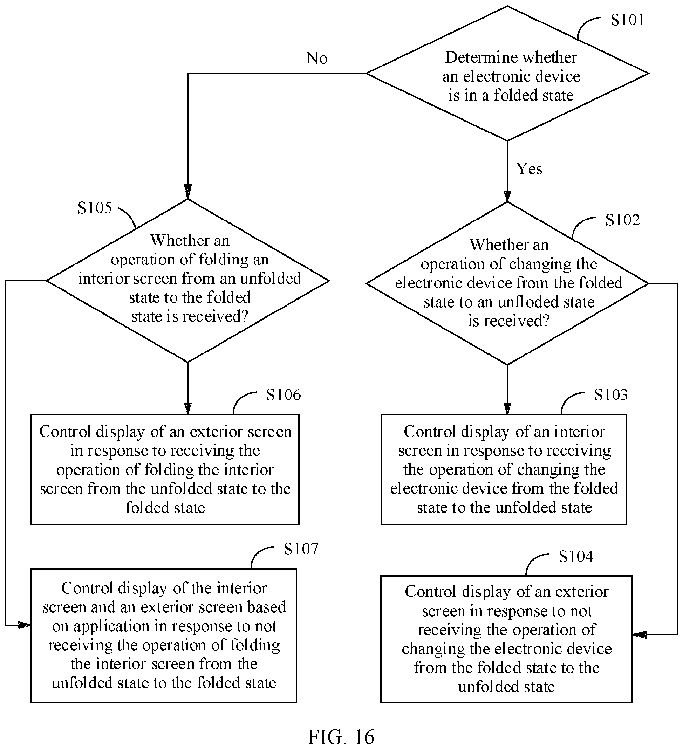

FIG. 16 is a schematic flowchart of a display control method for an electronic device according to an embodiment of this application. The electronic device may be the electronic device shown in FIG. 1. As shown in FIG. 16, the method includes the following steps.

S101: The electronic device determines whether the electronic device is in a folded state, and performs step S102 if the electronic device is in the folded state, or performs step S105 if the electronic device is not in the folded state.

The electronic device may determine the folded state or an unfolded state of the electronic device by using the acceleration sensor 150D in the embodiment shown in FIG. 1 or in another manner. Details are not described herein again.

S102: The electronic device determines whether an operation of changing the electronic device from the folded state to the unfolded state is received, and performs step S103 if the operation of changing the electronic device from the folded state to the unfolded state is received, or performs step S104 if the operation of changing the electronic device from the folded state to the unfolded state is not received.

S103: The electronic device controls display on an interior screen in response to receiving the operation of changing the electronic device from the folded state to the unfolded state.

It may be understood that, when the electronic device receives the operation of changing the electronic device from the folded state to the unfolded state, display on the interior screen may be controlled as shown in Example 1, Example 2, Example 3, or the application scenario 1. Details are not described herein again.

It may be understood that, when the electronic device enters or switches to a user interface on the interior screen, an exterior screen of the electronic device may be in a screen-off state and/or a screen-locked state, or an exterior screen is kept locked and a default user interface is displayed. This is not limited herein. The default user interface may include information such as time and a date. Specifically, a user may set, based on a requirement, the information displayed on the default user interface. For example, a preset pattern is displayed.

S104: The electronic device controls display on the exterior screen when the electronic device does not receive the operation of changing the electronic device from the folded state to the unfolded state.

It may be understood that, when the electronic device does not receive the operation of changing the electronic device from the folded state to the unfolded state, display on the exterior screen may be controlled as shown in Example 1, Example 2, Example 3, or the application scenario 1. Details are not described herein again.

S105: The electronic device determines whether an operation of folding the interior screen from the unfolded state to the folded state is received, and performs step S106 if the operation of folding the interior screen from the unfolded state to the folded state is received, or performs step S107 if the operation of folding the interior screen from the unfolded state to the folded state is not received.

S106: The electronic device controls display on the exterior screen in response to receiving the operation of folding the interior screen from the unfolded state to the folded state.

It may be understood that, when the electronic device receives the operation of changing the electronic device from the unfolded state to the folded state, display on the exterior screen may be controlled as shown in Example 4, Example 5, Example 6, or the application scenario 2. Details are not described herein again.

When the interior screen of the electronic device is folded from the unfolded state to the folded state, the electronic device may further turn off the interior screen. It should be noted that when the interior screen is folded to the folded state, a user interface or the like cannot be displayed normally to the user on the interior screen. Therefore, to reduce power consumption of the electronic device, the interior screen may be turned off. Turning off the interior screen may be understood as follows: The interior screen is off and locked, or the interior screen is off but unlocked. In addition, when the electronic device folds the interior screen to the folded state, the user cannot normally use the interior screen, in other words, the user cannot perform a normal operation on the interior screen to control the electronic device.

S107: When the interior screen of the electronic device is in use and the operation of folding the interior screen from the unfolded state to the folded state is not received, the electronic device controls display on the interior screen and the exterior screen based on application.

It may be understood that, when the interior screen of the electronic device is in use and the operation of folding the electronic device from the unfolded state to the folded state is not received, display on the interior screen and the exterior screen may be controlled as shown in Example 7, Example 8, Example 9, or the application scenario 3. Details are not described herein again.

It may be understood that embodiments of this application provide an electronic device and a display control method for the electronic device. The electronic device determines or controls display on an interior screen and/or an exterior screen by obtaining a status (for example, a folded state or an unfolded state) of the electronic device, so that an operation of a user is more convenient, utilization is high, practicability is high, and user experience is enhanced.

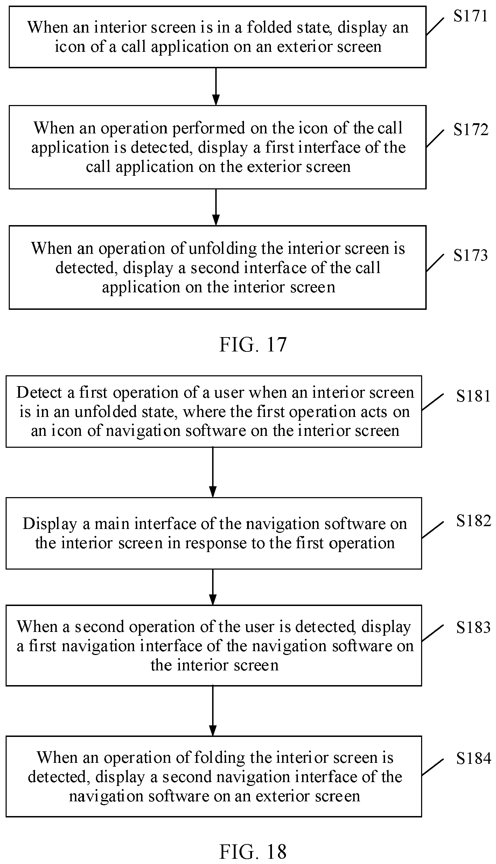

FIG. 17 is a schematic flowchart of a display control method for an electronic device according to an embodiment of this application. The electronic device may be the electronic device shown in FIG. 1. As shown in FIG. 17, the method includes the following steps.

S171: When an interior screen is in a folded state, display an icon of a call application on an exterior screen.

S172: When an operation performed on the icon of the call application is detected, display a first interface of the call application on the exterior screen.

It may be understood that, when the operation (for example, tapping the call application, as shown in FIG. 5A) performed on the icon of the call application is detected, the first interface of the call application may be displayed on the exterior screen.

S173: When an operation of unfolding the interior screen is detected, display a second interface of the call application on the interior screen.

It may be understood that, when the operation of unfolding the interior screen is detected, the second interface of the call application may be displayed on the interior screen (refer to FIG. 5B).

It may be understood that, in one embodiment, a quantity of elements displayed on the second interface is greater than a quantity of elements displayed on the first interface. The element includes any one or a combination of a call record, a contact, and a dialer. The call record includes any one or a combination of a calling number, a calling region, a caller name, and whether a call is a nuisance call.

For example, when a missed call is displayed on the icon of the call application, the first interface may display a call record. When the interior screen is switched to, the second interface displays the call record, a contact, and the dialer.

Certainly, it may be understood that, when the first interface is displayed the exterior screen, the first interface may display the call record, the contact, the dialer, and the like, or any combination thereof. For details, refer to the descriptions of Example 2, and details are not described herein again.

It may be understood that, when the second interface is displayed on the interior screen, the exterior screen may be in a screen-off state, so as to reduce power consumption of the electronic device.

It may be understood that when the electronic device enters or switches to a user interface on the interior screen, in other words, when the electronic device switches from the folded state to an unfolded state, if the user closes the electronic device again (in other words, the electronic device switches to the folded state again), the exterior screen of the electronic device may be set to the screen-off state and/or a screen-locked state, or the exterior screen is kept locked and a default user interface is displayed. For details, refer to Example 2. Details are not described herein again.

FIG. 18 is a schematic flowchart of still another display control method for an electronic device according to an embodiment of this application. The electronic device may be the electronic device shown in FIG. 1. As shown in FIG. 18, the method includes the following steps.

S181: Detect a first operation of a user when an interior screen is in an unfolded state, where the first operation acts on an icon of navigation software on the interior screen.

It may be understood that, as shown in FIG. 7A, the first operation may be that the user taps the icon of the navigation software.

S182: Display a main interface of the navigation software on the interior screen in response to the first operation.

It may be understood that, as shown in FIG. 7A, when the icon of the navigation software is operated (for example, clicked) on the interior screen (refer to FIG. 7A), the main interface of the navigation software may be displayed on the interior screen (refer to FIG. 7B).

S183: When a second operation of the user is detected, display a first navigation interface of the navigation software on the interior screen.

For example, when the user interface (namely, the main interface) of the icon of the navigation software is displayed, and an operation of searching for a route by the user on the main interface (refer to FIG. 7C) is detected, a corresponding route search result is displayed on the interior screen in response to the operation of searching for the route. To be specific, a map interface is displayed (refer to FIG. 7D(1)), so that the user can easily reach a corresponding destination.

S184: When an operation of folding the interior screen is detected, display a second navigation interface of the navigation software on an exterior screen.

It may be understood that, for example, when the application icon shown in FIG. 7A to FIG. 7D(1) is operated, and then the electronic device is closed (in other words, the electronic device is in a folded state), the second navigation interface of the navigation software is displayed on the exterior screen (as shown in FIG. 7D(2)).

For example, as shown in FIG. 7D(2), when a size of the exterior screen is small, only a part of content of the navigation software may be displayed on the exterior screen. For example, a navigation software interface is scaled down by a specific proportion and then mapped to the exterior screen for display.

For another example, when the size of the exterior screen is small, only some critical information of the navigation software interface may also be displayed on the exterior screen (refer to FIG. 7D(2)). For example, the critical information may be, but is not limited to a distance and time to a destination, a turning reminder (for example, a left turn or right turn after a quantity of meters), and a distance in meters to a speed monitoring point.

For another example, when the size of the exterior screen is large, the exterior screen may be set to continue displaying the navigation software interface, to be specific, the user interface of the navigation software displayed on the interior screen is automatically mapped to the exterior screen for display. Alternatively, for another example, when the size of the exterior screen is large, the exterior screen may also display only the critical information of the navigation interface, which may be specifically adjusted based on an actual requirement. This is not limited herein.

For another example, when the exterior screen is switched to, a quantity of elements displayed on the second navigation interface may be less than a quantity of elements displayed on the first navigation interface. For example, the element displayed on the first navigation interface includes a map interface and critical information, and the element displayed on the second navigation interface includes the critical information.

It may be understood that, when the electronic device switches from the unfolded state to the folded state (in other words, an operation of unfolding the interior screen is detected), the electronic device may be set to switch to the interior screen, enlarge navigation information displayed on the exterior screen, and display the enlarged navigation information on the interior screen, in other words, enlarge the element displayed on the second navigation interface and display the enlarged element on the interior screen.

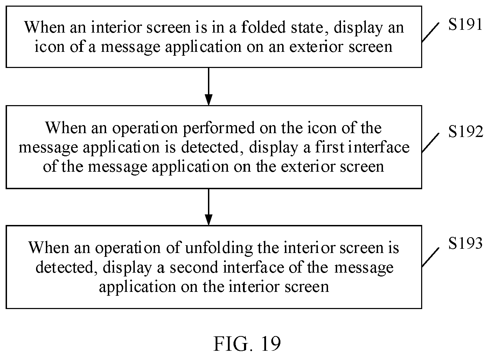

FIG. 19 is a schematic flowchart of yet another display control method for an electronic device according to an embodiment of this application. The electronic device may be the electronic device shown in FIG. 1. As shown in FIG. 19, the method includes the following steps.

S191: When an interior screen is in a folded state, display an icon of a message application on an exterior screen.

S192: When an operation performed on the icon of the message application is detected, display a first interface of the message application on the exterior screen.

For example, when the electronic device is in the folded state, the exterior screen receives a message reminder (for example, indicating that one or more new messages are received), and a user taps the message, the first interface of the message application is displayed on the exterior screen (as shown in FIG. 6A).

S193: When an operation of unfolding the interior screen is detected, display a second interface of the message application on the interior screen.

It may be understood that when the user performs an operation according to FIG. 6A (in other words, taps the message on the exterior screen), and unfolds the electronic device (in other words, detects the operation of unfolding the interior screen), the second interface of the message application is displayed on the interior screen (as shown in FIG. 6B).

It may be understood that, in one embodiment, a quantity of elements displayed on the second interface is greater than a quantity of elements displayed on the first interface. For example, the element displayed on the first interface includes a message reminder, prompt information, and a voice reply button. The element displayed on the second interface includes the message reminder, the prompt information, the voice reply button, a reply box, and an input method invoking window. The prompt information is used to prompt the user to unfold the interior screen.

For another example, when the user taps the message on the exterior screen, but the user directly unfolds the electronic device without performing an operation, the electronic device may be set to switch to the interior screen. In addition, the interior screen enters a home screen or an application interface displayed before a foldable screen is closed (in other words, is in the folded state) last time (for example, refer to FIG. 3A). Certainly, when the interior screen of the electronic device enters the home screen or the application interface displayed before the foldable screen is closed last time, a user interface of the interior screen may further configured with or display a message drop-down menu, prompt information, or the like. In this way, it may be convenient for the user to drop down a menu or tap the prompt information to view and/or process a message. In other words, the element displayed on the second interface further includes the home screen or the application interface displayed before the interior screen is in the folded state last time, and the message drop-down menu or the prompt information is set on the home screen or the application interface.

For another example, when the electronic device switches from the folded state to an unfolded state, and then the user closes the electronic device (in other words, an operation of folding the interior screen is detected), the electronic device may be set to display information such as "SMS message delivered" or "SMS message read" on the exterior screen.

In the foregoing embodiments provided in this application, the method provided in embodiments of this application is described from a perspective of the electronic device serving as an execution body. To implement the functions in the method provided in the foregoing embodiments of this application, the electronic device may include a hardware structure and/or a software module, to implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

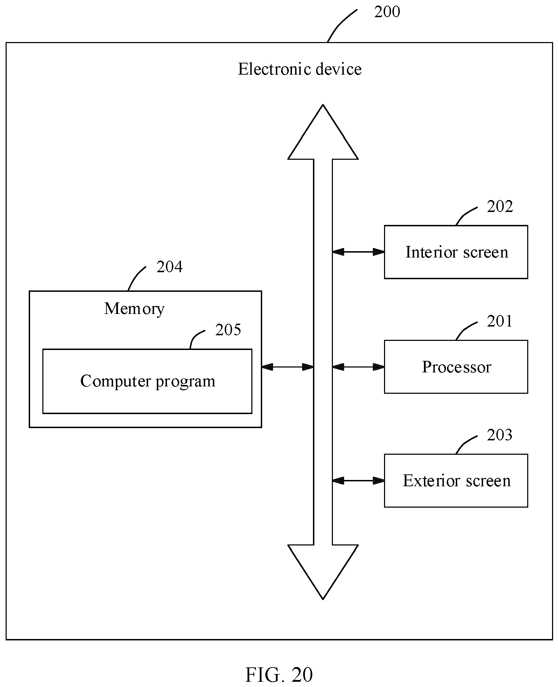

FIG. 20 shows an electronic device 200 according to this application. The electronic device 200 includes at least one processor 201, an interior screen 202, an exterior screen 203, and a memory 204. The processor 201 is coupled to the interior screen 202, the exterior screen 203, and the memory 204. The coupling in this embodiment of this application may be an indirect coupling or a communication connection between apparatuses, units, or modules in an electrical form, a mechanical form, or another form, and is used for information exchange between the apparatuses, the units, or the modules. A connection medium between the processor 201 and the interior screen 202, the exterior screen 203, and the memory 204 is not limited in this embodiment of this application. For example, in this embodiment of this application, in FIG. 17, the processor 201 may be connected to the interior screen 202, the exterior screen 203, and the memory 204 through a bus. The bus may be classified into an address bus, a data bus, a control bus, and the like.

Specifically, the memory 204 is configured to store one or more computer programs 205, and the one or more computer programs 205 include instructions. The processor 201 is configured to invoke the instructions stored in the memory 204, so that the electronic device 200 performs the display screen control method shown in FIG. 16.

In this embodiment of this application, the processor 201 may be a general-purpose processor, a digital signal processor, an application-specific integrated circuit, a field programmable gate array or another programmable logic device, a discrete gate or transistor logic device, or a discrete hardware component, and can implement or perform the methods, steps, and logical block diagrams disclosed in embodiments of this application. The general-purpose processor may be a microprocessor or any conventional processor or the like. The steps of the method disclosed with reference to embodiments of this application may be directly performed and completed by a hardware processor, or may be performed and completed by using a combination of hardware in the processor and a software module.

In this embodiment of this application, the memory 204 may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of an instruction or a data structure and that can be accessed by a computer, but is not limited thereto. The memory in this embodiment of this application may alternatively be a circuit or any other apparatus that can implement a storage function, and is configured to store program instructions and/or data.

It should be understood that the electronic device 200 may be configured to implement the display control method in embodiments of this application. For related features, refer to the foregoing descriptions. Details are not described herein again.

An embodiment of this application further provides a computer storage medium. The computer storage medium stores computer program code. When the processor 201 of the electronic device 200 executes the computer program code, the electronic device 200 performs related method steps in FIG. 16 to implement the display control method for the electronic device in the foregoing embodiment.

An embodiment of this application further provides a computer program product. When the computer program product runs on a computer, the computer is enabled to perform related method steps in FIG. 16 to implement the display control method for the electronic device in the foregoing embodiment.

The electronic device, the computer storage medium, and the computer program product provided in embodiments of this application each are configured to perform the corresponding methods provided above. Therefore, for beneficial effect that can be achieved by the electronic device, the computer storage medium, and the computer program product, refer to the beneficial effect in the corresponding methods provided above. Details are not described herein again.

It should be understood that the implementations of this application may be any combination, for example, may be used independently, or may be used in combination with each other to achieve different technical effect. This is not limited herein.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A display control method, applied to an electronic device, wherein the electronic device comprises an interior screen, an exterior screen, a front-facing camera, and a rear-facing camera; the interior screen is a foldable screen; the interior screen and the front-facing camera are located on one side of the electronic device, and the exterior screen and the rear-facing camera are located on the other side of the electronic device; and the method comprises:
when the interior screen is in a folded state, displaying an icon of a call application on the exterior screen;
when an operation performed on the icon of the call application is detected, displaying a first interface of the call application on the exterior screen; and
when an operation of unfolding the interior screen is detected, displaying a second interface of the call application on the interior screen, wherein a quantity of elements displayed on the second interface is greater than a quantity of elements displayed on the first interface.

2. The method according to claim 1, wherein the element comprises any one or a combination of a call record, a contact, and a dialer, and the call record comprises any one or a combination of a caller number, a caller region, a caller name, and whether a call is a nuisance call.

3. The method according to claim 2, wherein when a missed call is displayed on the icon of the call application, the first interface displays a call record, and the second interface displays the call record, a contact, and the dialer.

4. The method according to any one of claims 1 to 3, wherein the method further comprises:
when the second interface is displayed on the interior screen, the exterior screen is in a screen-off state.

5. The method according to any one of claims 1 to 4, wherein the method further comprises:
when an operation of folding the interior screen is detected, setting the exterior screen to the screen-off state and/or a screen-locked state, or keeping the exterior screen locked and displaying a default user interface.

6. A display control method, applied to an electronic device, wherein the electronic device comprises an interior screen, an exterior screen, a front-facing camera, and a rear-facing camera; the interior screen is a foldable screen; the interior screen and the front-facing camera are located on one side of the electronic device, and the exterior screen and the rear-facing camera are located on the other side of the electronic device; and the method comprises:
detecting a first operation of a user when the interior screen is in an unfolded state, wherein the first operation acts on an icon of navigation software on the interior screen;
displaying a main interface of the navigation software on the interior screen in response to the first operation;
when a second operation of the user is detected, displaying a first navigation interface of the navigation software on the interior screen; and
when an operation of folding the interior screen is detected, displaying a second navigation interface of the navigation software on the exterior screen, wherein a quantity of elements displayed on the second navigation interface is less than a quantity of elements displayed on the first navigation interface.

7. The method according to claim 6, wherein the element displayed on the first navigation interface comprises a map interface and critical information; and the element displayed on the second navigation interface comprises the critical information, wherein the critical information comprises one or a combination of a distance and time to a destination, a turning reminder, and a distance in meters to a speed monitoring point.

8. The method according to claim 6 or 7, wherein the method further comprises:
when an operation of unfolding the interior screen is detected, enlarging the element displayed on the second navigation interface and displaying the enlarged element on the interior screen.

9. A display control method, applied to an electronic device, wherein the electronic device comprises an interior screen, an exterior screen, a front-facing camera, and a rear-facing camera; the interior screen is a foldable screen; the interior screen and the front-facing camera are located on one side of the electronic device, and the exterior screen and the rear-facing camera are located on the other side of the electronic device; and the method comprises:
when the interior screen is in a folded state, displaying an icon of a message application on the exterior screen;
when an operation performed on the icon of the message application is detected, displaying a first interface of the message application on the exterior screen; and
when an operation of unfolding the interior screen is detected, displaying a second interface of the message application on the interior screen, wherein a quantity of elements displayed on the second interface is greater than a quantity of elements displayed on the first interface.

10. The method according to claim 9, wherein
the element displayed on the first interface comprises a message reminder, prompt information, and a voice reply button; and the element displayed on the second interface comprises the message reminder, the prompt information, the voice reply button, a reply box, and an input method invoking window, wherein the prompt information is used to prompt a user to unfold the interior screen.

11. The method according to claim 10, wherein
the element displayed on the second interface further comprises a home screen or an application interface displayed before the interior screen is in the folded state last time, and a message drop-down menu or prompt information is set on the home screen or the application interface.

12. The method according to any one of claims 9 to 11, wherein the method further comprises:
when an operation of folding the interior screen is detected, indicating on the exterior screen that a message has been delivered or a message has been read.

13. An electronic device, wherein the electronic device comprises:
an interior screen, wherein the interior screen is a foldable screen;
an exterior screen;
a front-facing camera;
a rear-facing camera, wherein the interior screen and the front-facing camera are located on one side of the electronic device, and the exterior screen and the rear-facing camera are located on the other side of the electronic device;
one or more processors;
a memory; and
one or more computer programs, wherein the one or more computer programs are stored in the memory, the one or more computer programs comprise instructions, and when the instructions are executed by the electronic device, the electronic device is enabled to perform the method according to any one of claims 1 to 5.

14. An electronic device, wherein the electronic device comprises:
an interior screen, wherein the interior screen is a foldable screen;
an exterior screen;
a front-facing camera;
a rear-facing camera, wherein the interior screen and the front-facing camera are located on one side of the electronic device, and the exterior screen and the rear-facing camera are located on the other side of the electronic device;
one or more processors;
a memory; and
one or more computer programs, wherein the one or more computer programs are stored in the memory, the one or more computer programs comprise instructions, and when the instructions are executed by the electronic device, the electronic device is enabled to perform the method according to any one of claims 6 to 8.

15. An electronic device, wherein the electronic device comprises:
an interior screen, wherein the interior screen is a foldable screen;
an exterior screen;
a front-facing camera;
a rear-facing camera, wherein the interior screen and the front-facing camera are located on one side of the electronic device, and the exterior screen and the rear-facing camera are located on the other side of the electronic device;
one or more processors;
a memory; and
one or more computer programs, wherein the one or more computer programs are stored in the memory, the one or more computer programs comprise instructions, and when the instructions are executed by the electronic device, the electronic device is enabled to perform the method according to any one of claims 9 to 12.

16. A computer storage medium, wherein the computer storage medium comprises instructions, and when the instructions are run on a device, the device is enabled to perform the method according to any one of claims 1 to 12.
